(19) Europäisches Patentamt
European Patent Office
Office européen des brevets

(11) EP 1 957 585 B1

(12) # FASCICULE DE BREVET EUROPEEN

(45) Date de publication et mention de la délivrance du brevet:
**27.09.2017 Bulletin 2017/39**

(21) Numéro de dépôt: **06841883.9**

(22) Date de dépôt: **07.12.2006**

(51) Int Cl.:
***C08L 83/04*** *(2006.01)* ***C09D 5/16*** *(2006.01)*
***C09D 183/04*** *(2006.01)* ***D06M 15/643*** *(2006.01)*
***D06N 3/12*** *(2006.01)*

(86) Numéro de dépôt international:
**PCT/FR2006/002676**

(87) Numéro de publication internationale:
**WO 2007/066011 (14.06.2007 Gazette 2007/24)**

(54) **VERNIS SILICONE POLYADDITION ANTI-SALISSURES, APPLICATION DE CE VERNIS SUR UN SUPPORT ET SUPPORT AINSI TRAITE**

FÄULNISVERHINDERNDER SILIKONLACK MIT MEHREREN ZUSÄTZEN, ANWENDUNG BESAGTEN LACKS AUF EINEN TRÄGER UND DAMIT BEHANDELTER TRÄGER

ANTI-FOULING POLYADDITION SILICONE VARNISH, APPLICATION OF SAID VARNISH TO A SUPPORT AND SUPPORT TREATED THUS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **09.12.2005 FR 0553821**

(43) Date de publication de la demande:
**20.08.2008 Bulletin 2008/34**

(73) Titulaire: **Bluestar Silicones France**
**69486 Lyon Cedex 03 (FR)**

(72) Inventeurs:
- **POUCHELON, Alain**
**F-69330 Meyzieu (FR)**
- **QUEMIN, Maryline**
**F-69003 Lyon (FR)**

(74) Mandataire: **Cabinet Plasseraud**
**66, rue de la Chaussée d'Antin**
**75440 Paris Cedex 09 (FR)**

(56) Documents cités:
**EP-A- 0 426 487 EP-A- 0 553 840**
**EP-A- 0 764 702 EP-A- 0 953 675**
**EP-A- 1 013 817 EP-A- 1 046 671**
**WO-A-01/98418 WO-A-98/42789**
**FR-A- 2 719 598 GB-A- 2 045 788**
**US-A- 5 616 672**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 957 585 B1

## Description

Le domaine général de l'invention est celui des revêtements ou vernis polymères aptes à conférer à des supports éventuellement au moins en partie constitués de silicone, entres autres, une résistance aux salissures, une mise en oeuvre aisée, un caractère glissant...

Plus précisément, l'invention concerne des compositions silicones utiles notamment pour la réalisation de vernis applicables sur des supports, dont on cherche à diminuer, notamment, la tendance à fixer les salissures.
Les supports concernés sont divers et peuvent être notamment constitués :

- par des supports souples notamment fibreux, tissés ou non, revêtus d'au moins une couche de protection ou de renfort mécanique, à base de polymère d'enduction, du type élastomère silicone, par exemple ; des supports souples d'élastomères silicones armés de fibres tissées ou non
- par des supports massiques en silicone et/ou revêtus d'une ou plusieurs couches de silicone, par exemples des pièces en métal, en plastique ou en céramique (pièces composites comme les câbles et les isolateurs électriques e.g.) ;
- ou bien encore par des supports polymères ou élastomères, en particulier des films plastiques, comme par exemple : des rubans de transfert thermique utilisables notamment comme support d'encre dans des imprimantes à transfert thermique ou des films d'emballage de protection.

La présente invention vise également les procédés d'application du vernis anti-salissures qu'elle concerne, sur différents supports.

Enfin, l'invention a pour objet les supports revêtus de tels vernis anti-salissures et, en particulier :

◦ les supports souples tels que les toiles textiles éventuellement revêtues d'une couche d'élastomère silicone sur laquelle est appliqué le vernis anti-salissures, de telles toiles étant susceptibles d'être utilisées pour la fabrication, e.g.:

* d'éléments d'architecture textile (bâches, abris, portes souples...) et membranes coupe-feu souples
* de certains tissus d'ameublement
* de vêtements spécifiques
* d'airbags
* de tresses de verre
* de bandes transporteuses
* de compensateurs
* de rubans de transfert thermique, par exemple constitués par des films plastiques (e.g. en polyester) porteurs d'encre et utilisables dans des imprimantes à transfert thermique ;
* de films d'emballage de protection;

◦ et les pièces massives par exemple en élastomères silicones.

Il est connu de revêtir des supports souples (textiles) ou massiques à l'aide de films ou d'enductions polymères, par exemple des silicones, de préférence sous formes d'élastomères.

Les enductions élastomères silicones sur des supports e.g à caractère fibreux procurent d'ores et déjà, du fait des propriétés intrinsèques des silicones, de nombreux avantages aux composites ainsi formés, à savoir entre autres une bonne souplesse et une bonne résistance mécanique.

Par ailleurs, à la différence des élastomères traditionnels, les silicones leur confèrent entre autres une tenue thermique accrue et une forte longévité. Ces caractéristiques sont largement mises à profit dans les utilisations de ces tissus enduits pour la fabrication des airbags.

Ainsi, le brevet FR-B-2.719.598 divulgue des compositions élastomère silicone vulcanisables à froid (EVF) par polyaddition, pour l'enduction de toiles textiles en Nylon® destinées à la fabrication "d'air bags". Ces compositions comprennent un mélange formé de :

(I) 25 p/p Huile POS ($M^{Vi}DM^{Vi}$) : PolyDiMéthylSiloxane -PDMS- $\alpha,\omega$ (diméthylvinylsiloxy) de viscosité 100 000 mPa.s contenant environ 0,083 % molaire de groupements $M^{Vi} = (CH_3)_2(CH_2{=}CH)SiO_{1/2}$, $D^{Vi} = (CH_3)(CH_2{=}CH)SiO_{2/2}$ ;
(I') 21p/p PDMS $M^{Vi}DM^{Vi}$ (10 000 mPa.s), (SiVi = 0,083 % molaire),
(II) 5p/p Huile POS ($M^HDD^HM^H$) : poly(diméthylsiloxy)(méthylhydrogénosiloxy) $\alpha,\omega$ diméthylhydrogénosiloxy, de viscosité 300 mPa.s et contenant 0,17 % molaire de groupements H;
(III) catalyseur Pt
(IV) 5p/p un promoteur d'adhérence (VTMO/GLYMO/Ti(OBu)4;

(V) éventuellement une charge minérale,
(VI) 0,03p/p EthynylCycloHexanol
(VII) 38p/p résine POS vinylée = $M^{Vi}DD^{Vi}M^{Vi}Q$ (SiVi = 0,6% poids).
VTMO vinyltriméthoxysilane
GLYMO gamma-Glycydoxypropyltriméthoxysilane
Bu: butyle

Néanmoins, il est connu que les couches d'enduction en silicone élastomère ont souvent un toucher un peu happant qui est pénalisant pour les "airbags". Cette préoccupation du glissant superficiel intéresse également les revêtements pour rubans à transfert thermique (e.g. en polyester) ou bien encore les films d'emballage de protection (e.g. en polyéthylène ou en polypropylène).

Les rubans de transfert thermique sont utilisables dans des imprimantes à transfert thermique. Ces rubans de transfert thermique sont très fins (quelques microns) et sont revêtus, sur l'une de leurs faces, d'une couche d'encre (cires ou résines) et sur l'autre de leurs faces, d'un revêtement de protection. On utilise en général un revêtement de protection très fin d'épaisseur comprise entre 0,1 et 1 micromètre pour protéger la surface du film et améliorer l'impact de la tête d'impression sans déformer le transfert de l'encre sur le support appliqué. Dans des imprimantes dont la vitesse d'impression est comprise entre 150 et 300 mm/s, il est très important que la tête d'impression (plate ou en coin), lorsqu'elle frappe le revêtement de protection du ruban, puisse glisser sur la surface du revêtement, à une température élevée comprise entre 100 et 200°C.

S'agissant des films d'emballage de protection, on prévoit parfois de leur appliquer un sur-vernissage à base de silicone, afin de leur conférer des propriétés d'anti-adhérence. Mais il convient que ce sur-vernissage possède un glissant au moins équivalent à celui du film plastique de départ (imprimé ou non).

Dans tous les cas cités ci-dessus à titre illustratif, les composites souffrent d'un manque de glissant, qui peut être associé aux propriétés mécaniques et superficielles (coefficient de friction trop élevé) des silicones.

Dans le cas des applications textiles, cet inconvénient de manque de glissant se manifeste dans la pratique par une faible mobilité des tissus enduits sur les tables de confection ce qui en pénalise la productivité. Plus spécifiquement dans le cas des airbags, c'est le déploiement du sac lors du déclenchement de l'airbag qui peut être freiné de façon très préjudiciable.

Divers types de traitements sont envisageables pour pallier cette difficulté. Néanmoins le compromis glissant de surface/propriétés d'usage est tel qu'un vernissage semble être l'un des moyens les plus adaptés, à cette fin.

Dans le domaine des textiles architecturaux ou des textiles d'ameublement, les fabricants sont en outre demandeurs de composites "support fibreux (tissé ou non) / revêtement élastomère d'enduction" qui possèdent non seulement les caractéristiques essentielles évoquées ci-dessus, mais aussi des performances supplémentaires importantes telles que :

* une résistance aux salissures,
* de bonnes caractéristiques d'aspect notamment au regard de la coloration et de la brillance,
* une aptitude à l'étalement sur une couche silicone, voire non silicone (par exemple PolyChlorure de Vinyle, Polyuréthanne, PolyAmide),
* une mise en oeuvre aisée et économique sur le plan industriel,
* et une bonne cohésion des composites.

Ces propriétés peuvent être apportées par un revêtement de surface (vernissage) approprié.

Le problème général à la base de l'invention est donc la mise au point d'un vernis silicone propre à remplir parfaitement ce rôle, notamment pour ce qui concerne les vertus anti-salissures.

La demande PCT WO-A-00/59992 (R99035) décrit des compositions silicones utiles notamment pour la réalisation de vernis applicables sur des supports, dont on cherche à diminuer le coefficient de friction. L'une de ces compositions comprend au moins un polyorganosiloxane A (POS) réticulable par l'intermédiaire de groupements fonctionnels de réticulation (GFR) par voie cationique et/ou radicalaire et un amorceur C choisi parmi les borates d'onium, caractérisée en ce qu'elle comporte en outre des molécules POS D substituées par des groupements fonctionnels secondaires (GFS) portés par des atomes de silicium et sélectionnés parmi ceux comprenant au moins un motif alcoxy et/ou époxy et/ou carboxy, et éventuellement une charge (e.g. silice).

POS A = 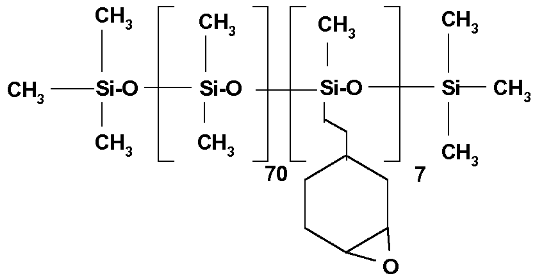

POS D = 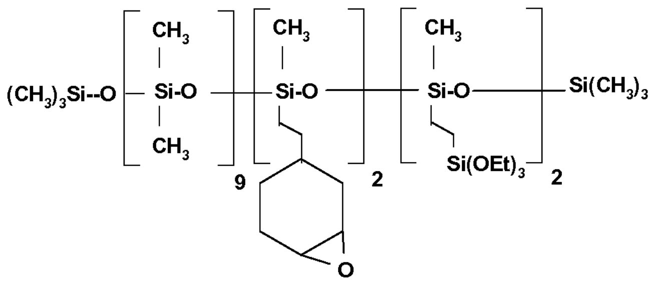

C = 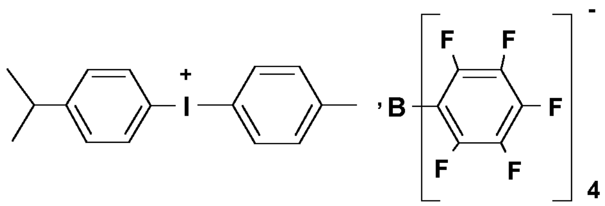

Ces compositions peuvent comporter en outre des charges et en particulier des charges siliciques qui peuvent être par exemple :

des silices de combustion traitées à l'hexaméthyldisilazane ou à l'octaméthyl-cyclotétrasiloxane (surface spécifique jusqu'à environ 300 $m^2/g$), des silices fumées, des fibres synthétiques ou naturelles (polymères) broyées, des carbonates de calcium, du talc, des argiles, des dioxydes de titane.

De telles compositions sont utilisées comme vernis anti-salissures pour revêtements silicone RTV de tissus pour "air bag", pour des rubans à transfert thermique ou pour des films d'emballage.

De tels vernis ne sont pas des plus performants en termes de propriétés anti-salissures et restent perfectibles en termes de coefficient de glissement. En outre, ils nécessitent la mise en oeuvre de silicones particuliers réticulables par voie cationique sous activation UV, ce qui laisse une marge d'amélioration sur le plan économique et sur le plan de la simplification des moyens mis en oeuvre.

La demande PCT WO-A-WO 03/106564 décrit un vernis silicone anti-friction pour textiles revêtus d'élastomères silicones. Ce vernis économique, adhérent, apportant le glissant recherché, résistant à la salissure, et brillant, est formé par une composition silicone réticulable par polyaddition comprenant, d'une part,

- 85 parties de PDMS contenant env. 2,5 % de Vi sous forme de groupes $D^{Vi}$
- 15 parties de PDMS $\alpha,\omega$-diMeVi de viscosité 600 mPa.s
- 20 parties de PDMS $\alpha,\omega$ diMeVi de viscosité 100 Pa.s
- 0,052 parties d'ethynylcyclohexanol
- 10 parties de $\gamma$ méthacryloxypropyltriméthooxysilane
- 15 parties de polyméthylhydrogenosiloxane de viscosité 20 mPa.s
- 0,1 parties de catalyseur platine
- 5 parties d'un composant particulaire (D), à savoir l'Orgasol® 2002 ES3 (poudre de PA 12 de diamètre moyen 30 um).

La demande de brevet WO-A-2004067613 divulgue un autre vernis silicone pour revêtement antisalissure de composites siliconés. Ce vernis comprend une composition de silanes fonctionnels qui réticule sous l'action de l'humidité atmosphérique et, de façon, accélérée à chaud. Cette composition est, par exemple la suivante :

~ Alcénylsilane -A.1- : Vinyltriméthoxysilane (VTMO),
~ Alcénylsilane -A.2- : Dynasilan® 6490 est un condensat de vinyltriméthoxysilane (VTMO) commercialisé par Degussa,
~ Composant -B.1- du système catalytique : DADBE : diacétate de dibutylétain,
~ Composant -B.2- du système catalytique : TBOT : titanate de butyle,
~ Charge ultrafine -C- : R812 est une silice pyrogénée traitée commercialisée par Degussa.

La demande de brevet WO-A-2004067620 divulgue encore un autre vernis silicone anti-salissures pour textiles revêtus d'élastomères silicones. Ce vernis économique, adhérent, peu glissant et brillant comprend une composition silicone réticulable à base de pour 100 parties en poids :

- 1- au moins 80 parties en poids de :

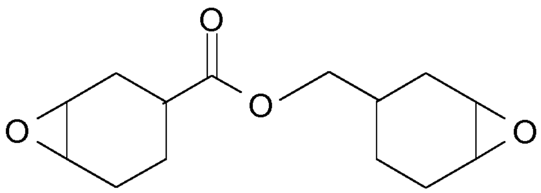

**(1.1)**

- 2- de 0,1 à 10 parties en poids de :

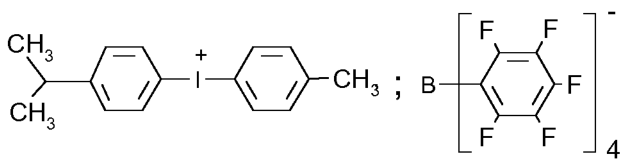

- 3- de 0 à 10 parties en poids d'au moins un polydiméthylsiloxane (PDMS) acrylate ou époxy ;
- 4- de 0 à 10 parties en poids d'au moins un composé silylé tel que défini ci-dessus et porteur, par molécule, d'au moins un groupement époxy ;
- 5- de 0 à 10 parties en poids d'au moins un PDMS acrylate/époxy ;
- 6- de 0 à 10 parties en poids d'au moins une charge ultrafine telle que définie ci-dessus;
- 7- de 0 à 10 parties en poids d'au moins un épaississant tel que défini ci-dessus ;
- 8- de 0 à 10 parties en poids d'au moins au moins un autre additif fonctionnel tel que défini ci-dessus.

Ces deux dernières compositions de vernis sont très performantes mais peuvent dans certains cas présenter quelques défauts de leurs avantages ; en particulier leur mode de réticulation fait qu'elles sont très sensibles à l'environnement d'utilisation (humidité, lumière) ce qui peut les rendre délicates à utiliser sur les machines d'enduction textile.
La demande de brevet EP1013817 traite des compositions de caoutchouc pour revêtir des textiles visant à diminuer l'état collant et pour maintenir la barrière de pression entre deux zones soumises à un différentiel de pression.
La demande de brevet WO01/98418 décrit des compositions de silicone permettant de supprimer les brouillards formés au moment du couchage lorsque l'on applique une couche de silicone sur du papier pelable. La composition comprend une composition de silicone sans solvant, et une composition liquide de silicone supprimant les brouillards ayant une viscosité de 150 à 50 000 mPa.s.
Dans ces circonstances, l'un des objectifs essentiels de la présente invention est de fournir de nouvelles compositions perfectionnées de vernis anti-salissures pour supports éventuellement siliconés divers, notamment des supports souples (à renfort fibreux) en particulier ceux revêtus d'élastomères silicones ou des supports massifs en élastomère silicone.
Ces perfectionnements dans les nouvelles compositions se traduiront au moins en ce qui concerne les deux qualités suivantes:

1. mise en oeuvre facilitée par rapport aux précédentes compositions;
2. très bonne résistance à la salissure et, avantageusement, vis-à-vis d'au moins l'une des autres qualités suivantes:

3. bon étalement de la composition sur une couche silicone;
4. adhérence sur le support et en particulier sur la couche d'élastomère silicone enduit;
5. absence de coloration mais brillance ;
6. résistance mécanique suffisante de la couche superficielle ;
7. applicable aisément sur divers types de supports;
8. et économique.

Un autre objectif de l'invention est de fournir un procédé de vernissage simple et économique de différents supports siliconés ou non formés, par exemple, par des substrats fibreux tissés ou non et enduits d'une couche d'élastomère silicone réticulé ou par des supports massifs au moins en partie constitués par du silicone, à l'aide d'un vernis anti-salissures à base d'espèces siliciées compatibles avec les élastomères silicones.
Un autre objectif essentiel de l'invention est de fournir un composite comprenant un support de préférence revêtu d'au moins une couche d'élastomère et recouvert d'un vernis silicone tel que défini ci-dessus, par exemple, une toile enduite d'élastomère silicone réticulé, à haute résistance aux salissures et à faible coefficient de friction.
Ces objectifs, parmi d'autres, sont atteints par la présente invention qui concerne, en premier lieu, une composition silicone réticulable utile notamment comme vernis ayant en particulier des propriétés anti-salissures, cette composition étant du type de celles réticulables par polyaddition et comprenant :

- au moins deux espèces organosiliciées réactives (A), (B) entre elles en présence d'un catalyseur (C) métallique (de préférence au platine) pour permettre la réticulation par polyaddition, ces deux espèces étant constituées par des polyorganosiloxanes (POS),
- éventuellement au moins un composant particulaire (D) utile notamment comme charge;
- au moins un inhibiteur de réticulation (E) utile notamment comme régulateur;
- éventuellement au moins un solvant (F),

éventuellement au moins un promoteur d'adhérence (G);
- éventuellement au moins un additif fonctionnel (H) pour conférer des propriétés spécifiques;

caractérisée en ce que

→ l'espèce (A) comporte au moins une résine POS présentant, par molécule, au moins un groupe alcényle, en C2-C6 liés au silicium et comprenant au moins deux motifs siloxy différents choisis parmi ceux de formules:

$$W_aZ_bSiO_{(4-(a+b))/2} \quad (1)$$

dans laquelle :

- les symboles W, identiques ou différents, représentent chacun un groupe alcényle;
- les symboles Z, identiques ou différents, représentent chacun un groupe hydrocarboné monovalent non hydrolysable, exempt d'action défavorable sur l'activité du catalyseur, éventuellement halogéné et, choisi parmi les groupes alkyles ainsi que parmi les groupes aryles,
- a est 0, 1 ou 2, b est 0, 1 ou 2 et a + b est compris entre 0 et 3,

éventuellement au moins une partie des autres motifs sont des motifs de formule moyenne :

$$Z_cSiO_{(4-c)/2} \quad (2)$$

dans laquelle Z a la même signification que ci-dessus et c a une valeur comprise entre 0 et 3;

l'un au moins de ces deux motifs siloxy différents étant un motif T ou Q,
→ l'espèce (B) comporte au moins un réticulant POS présentant, par molécule, au moins deux atomes d'hydrogène liés au silicium ;
→ le ratio molaire R = SiH/SiVi de l'espèce (B) hydrogéno à l'espèce (A) alcényle est tel que $R \geq 2$, de préférence $R > 2$, de préférence $R \geq 5$ et, encore plus préférentiellement $6 \geq R \geq 11$,
→ la concentration $C_B$ en espèce (B) (en parties en poids pour 100 parties en poids de (A)) est telle que $200 \geq C_B \geq 30$ ; et
→ la viscosité dynamique η (mPa.s à 25°C) de la composition avant application est telle que $2 \leq \eta \leq 500$.

Le vernis silicone selon l'invention est avantageux en ce qu'il permet d'augmenter très fortement la résistance à la salissure, tout en étant de mise en oeuvre aisée.

Les qualités mécaniques et les propriétés d'usage des supports vernis au moyen de la composition selon l'invention, ne sont pas affectées.

En outre, dans la mesure où elle peut être présentée en 2 parties non réactives isolément, cette composition de vernis possède une stabilité suffisante pour un usage différé par rapport à sa fabrication d'une durée de stockage compatible avec des critères de commercialisation.

La composition selon l'invention conduit après étalement et durcissement (séchage/réticulation) à une couche superficielle, mince, protectrice, dure, lisse, brillante et transparente de *vernis* sur un support, de préférence enduit d'un polymère (par exemple un élastomère silicone). Au sens de l'invention, la couche de vernis a par exemple une épaisseur sensiblement homogène inférieure ou égale à 15 $\mu$m, de préférence à 5 $\mu$m.

Il est du mérite des inventeurs d'avoir sélectionné des résines POS (A) et des réticulants POS (B) selon un ratio molaire R adapté, ces espèces étant réticulables par polyaddition en présence de platine (C) ou autre métal approprié.

Ces compositions sont applicables sur des revêtements silicones et leur apportent en particulier :

- un aspect vernis;
- des caractéristiques d'antisalissure;
- et un bon glissant de surface

Dans le présent exposé, on se réfère à la nomenclature "silicone" suivante pour représenter les motifs siloxy ("Chemistry and technology of silicones" Walter NOLL Academic Press 1968 Table 1 page 3") :

→ M : $R_3$ $SiO_{1/2}$ avec R = Z ou Z" dans les formules (1) et (1") infra

→ $M^{Alc}$: $(R^1)_x(R^2)_y$ $SiO_{1/2}$ avec $R^1$= Z ou Z" ; $R^2$= W ou W" dans les formules (1) et (1") infra et x+y=3; x=1 ou 2 et y= 1 ou 2 -de préférence x=2 et y=1.

→ $M^H$ : $(R^1)_x(H)_y$ $SiO_{1/2}$ avec $R^1$= Z ou Z" dans les formules (1) et (1") infra; H= Hydrogène et x+y=3; x=1 ou 2 et y= 1 ou 2 -de préférence x=2 et y=1.

→ D : $R_2$ $SiO_{2/2}$ avec R = Z ou Z" dans les formules (1) et (1") infra

→ $D^{Alc}$ : $R^1R^2$ $SiO_{2/2}$ avec $R^1$= Z ou Z" ; $R^2$= W ou W" dans les formules (1) et (1").

→ $D^H$: $R^1HSiO_{2/2}$ avec $R^1$= Z ou Z" dans les formules (1) et (1") et H= Hydrogène.

→ T : $RSiO_{3/2}$ avec R = Z ou Z" dans les formules (1) et (1") infra

→ $T^{Alc}$: $R^2SiO_{3/2}$ avec $R^2$= W ou W" dans les formules (1) et (1") infra.

→ Q : $SiO_{4/2}$.

De préférence, l'alcényle W ou W" est un vinyle, le symbole "Alc" est alors remplacé par le symbole "Vi".

Le choix de la résine POS (A) est un paramètre important de l'invention. Ainsi, l'espèce (A) inclut toutes les résines comprenant chacune au moins deux motifs siloxy différents choisis parmi ceux de formules:

$$W_aZ_bSiO_{(4-(a+b))/2} \qquad (1)$$

dans laquelle :

- les symboles W, identiques ou différents, représentent chacun un groupe alcényle;
- les symboles Z, identiques ou différents, représentent chacun un groupe hydrocarboné monovalent non hydrolysable, exempt d'action défavorable sur l'activité du catalyseur, éventuellement halogéné et, choisi parmi les groupes alkyles ainsi que parmi les groupes aryles,
- a est 1 ou 2 - de préférence 1 -, b est 0, 1 ou 2 et a + b est compris entre 1 et 3,
- éventuellement au moins une partie des autres motifs sont des motifs de formule moyenne :

$$Z_cSiO_{(4-c)/2} \qquad (2)$$

dans laquelle Z a la même signification que ci-dessus et c a une valeur comprise entre 0 et 3;
l'un au moins de ces deux motifs siloxy différents étant un motif T ou Q.

Par "alcényle", on entend une chaîne hydrocarbonée insaturée, linéaire ou ramifiée, substituée ou non, présentant au moins une double liaison oléfinique, et plus préférablement une seule double liaison. De préférence, le groupe "alcényle" présente de 2 à 8 atomes de carbone, mieux encore de 2 à 6. Cette chaîne hydrocarbonée comprend éventuellement au moins un hétéroatome tel que O, N, S.

Des exemples préférés de groupes "alcényle" sont les groupes vinyle, allyle et homoallyle; le vinyle étant

particulièrement préféré.

Par "alkyl", on désigne une chaîne hydrocarbonée saturée, cyclique, linéaire ou ramifiée, éventuellement substituée (e.g. par un ou plusieurs alkyles), de préférence de 1 à 10 atomes de carbone, par exemple de 1 à 8 atomes de carbone, mieux encore de 1 à 4 atomes de carbone.

Des exemples de groupes alkyle sont notamment méthyle, éthyle, isopropyle, n-propyle, tert-butyle, isobutyle, n-butyle, n-pentyle, isoamyle et 1,1-diméthylpropyle.

La partie "alkyl" du radical "alcoxy" est telle que définie ci-dessus.

"L'alkyl" peut être perfluoré, et par "alkyl perfluoré", on désigne un alkyle comprenant au moins un groupe perfluoroalkyle, ayant de préférence pour formule :

$$-(CH_2)_p-C_qF_{2q+1}$$

dans laquelle p représente 0, 1, 2, 3 ou 4 ; q est un entier de 1 à 10 ; et $C_qF_{2q+1}$ est linéaire ou ramifié. Des exemples préférés de ce radical sont : $-(CH_2)_2-(CF_2)_5-CF_3$ et $-(CF_2)_7-CF_3$.

L'expression "aryl" désigne un groupe hydrocarboné aromatique, ayant de 6 à 18 atomes de carbone, monocyclique ou polycyclique et de préférence monocyclique ou bicyclique. Il doit être entendu que, dans le cadre de l'invention, par radical aromatique polycyclique, on entend un radical présentant deux ou plusieurs noyaux aromatiques, condensés (orthocondensés ou ortho et péricondensés) les uns aux autres, c'est-à-dire présentant, deux à deux, au moins deux carbones en commun.

A titre d'exemple "d'aryle", on peut mentionner e.g les radicaux phényle.

Avantageusement, le rapport nombre des motifs "M"/ nombre de motifs "Q" et/ou "T" est de 4/1 à 0,5/1. Le rapport nombre de motifs "D" / nombre de motifs "Q" et/ou "T" est de 100/1 à 0.

Les résines (A) présentent de préférence un rapport molaire O/Si supérieur ou égal à 0,75; lorsque ledit rapport est inférieur ou égal à 1, lesdites résines sont généralement liquides; des produits plus visqueux présentent un rapport O/Si voisin de 1; des résines solides thermoplastisques ou à haut point de ramollissement sont obtenues lorsque ledit rapport supérieur à 1.

Conformément à l'invention, une préférence peut être donnée pour les résines (A) à celles comprenant des molécules constituées de motifs siloxy $M^{Alc}$, M et Q et/ou des molécules constituées de motifs siloxy M, $D^{Alc}$ et Q.

Ces résines (A) sont des oligomères ou polymères organopolysiloxanes ramifiés bien connus et disponibles dans le commerce. Elles peuvent se présenter sous la forme de solutions, de préférence siloxaniques. Comme exemples d'oligomères ou de polymères organopolysiloxanes ramifiés, on peut citer les résines MQ, les résines MDQ, les résines TD et les résines MDT, les fonctions alcényles pouvant être portées par les motifs M, D et/ou T. Comme exemple de résines qui conviennent particulièrement bien, on peut citer les résines MDQ ou MQ alcénylées (e.g. vinylées), ces groupes alcényles (e.g. vinyles) étant portés par les motifs M et/ou D.

De préférence, la résine POS (A) a une teneur pondérale en radical(aux) alcényle(s) comprise entre 0,1 et 20 % en poids et, de préférence, entre 0,2 et 10 % en poids.

Selon une variante, la composition qui comprend l'espèce (A) comporte en outre au moins un POS (A") hyperalcénylé différent d'une résine, ce POS (A") hyperalcénylé comprenant des motifs siloxyle de formule :

$$W''_{a''}\ Z''_{b''}\ SiO_{(4-(a''+b''))/2} \qquad (1'')$$

dans laquelle :

- les symboles W", identiques ou différents, représentent chacun un groupe alcényle ;
- les symboles Z", identiques ou différents, représentent chacun un groupe hydrocarboné monovalent non hydrolysable, exempt d'action défavorable sur l'activité du catalyseur, éventuellement halogéné et, choisi parmi les groupes alkyles ainsi que parmi les groupes aryles,
- a" est 1 ou 2, b" est 0, 1 ou 2 et a" + b" est compris entre 1 et 3,
- éventuellement au moins une partie des autres motifs sont des motifs de formule moyenne :

$$Z''_{c''}\ SiO_{(4-c'')/2} \qquad (2'')$$

dans laquelle Z" a la même signification que ci-dessus et c" a une valeur comprise entre 0 et 3 ;

ce POS (A") hyperalcénylé comprenant, de préférence, des molécules de formule suivante :

$$(M^{Alc})_n(D)_p(D^{Alc})_q(M)_m$$

dans laquelle:

$p \geq 0$, $q > 0$, $n + q \geq 3$, de préférence $n + q \geq 4$;
$n = 0$, 1 ou 2;
$m = 0$, 1 ou 2.

Les POS (A") hyperalcénylés peuvent être très majoritairement formés de motifs de formule (**1"**) ou peuvent contenir, en outre, des motifs de formule (**2"**). De même, ils peuvent présenter une structure linéaire. Leur degré de polymérisation est, de préférence, compris entre 2 et 5 000. Leur teneur en groupements alcényles exprimée en mole pour 100g de POS est $\geq 0{,}035$ préférablement $\geq 2$.

Z" est généralement choisi parmi les radicaux méthyle, éthyle et phényle, 60 % molaire au moins des radicaux Z" étant des radicaux méthyle.

Des exemples de motifs siloxyle de formule (**1"**) sont le motif vinyldiméthylsiloxane, le motif vinylphénylméthylsiloxane et le motif vinylsiloxane.

Des exemples de motifs siloxyle de formule (**2"**) sont les motifs $SiO_{4/2}$, diméthylsiloxane, méthylphénylsiloxane, diphénylsiloxane, méthylsiloxane et phénylsiloxane.

Des exemples de POS (A") sont les diméthylpolysiloxanes à extrémités diméthylvinylsilyle, les copolymères méthylvinyldiméthylpolysiloxanes à extrémités triméthylsilyle, les copolymères méthylvinyldiméthylpolysiloxanes à extrémités diméthylvinylsilyle, les méthylvinylpolysiloxanes cycliques.

La viscosité dynamique $\eta_d$ de ce POS (A") est comprise entre 0,01 et 1000 Pa.s, de préférence entre 0,01 et 500 Pa.s.

De préférence, le POS (A") comprend au moins 98 % de motifs siloxyle D°': - $R_2SiO_{2/2}$ avec R répondant à la même définition que Z, ce pourcentage correspondant à un nombre de motifs pour 100 atomes de silicium.

De préférence, les motifs alcényles W" sont des vinyles portés par des motifs siloxyles D et éventuellement M et/ou T.

S'agissant de l'espèce (B), elle comporte, de préférence, au moins un POS (B) hydrogéné, ce POS (B) comprenant des motifs siloxyle de formule :

$$H_dL_eSiO_{(4-(d+e))/2} \qquad (3)$$

dans laquelle :

- H est l'hydrogène,
- les symboles L, identiques ou différents, représentent chacun un groupe hydrocarboné monovalent non hydrolysable, exempt d'action défavorable sur l'activité du catalyseur, éventuellement halogéné et, de préférence choisi parmi les groupes alkyles ainsi que parmi les groupes aryles,
- d est 1 ou 2, e est 0, 1 ou 2 et d + e a une valeur comprise entre 1 et 3 ;
- éventuellement, au moins une partie des autres motifs étant des motifs de formule moyenne :

$$L_gSiO_{(4-g)/2} \qquad (4)$$

dans laquelle L a la même signification que ci-dessus et g a une valeur comprise entre 0 et 3 ;

ce POS (B) hydrogéné correspondant, de préférence, à des molécules de formules (**5**) et/ou (**6**) suivantes :

$$(M^H)_r(D)_s(D^H)_t(M)_u \qquad (\mathbf{5})$$

dans laquelle:

$r = 0 - 2$;
$s = 0 - 50$;
$t = 0 - 70$;
$u = 0 - 2$;
$r \geq 0$; $\geq 0$; $t \geq 0$; $u \geq 0$; $r + t \geq 3$

$$(M^H)_{(2w+2)}Q_w \qquad (\mathbf{6})$$

formule dans laquelle:

w = 1 à 6, de préférence 1 à 4;
(B) étant de préférence choisi parmi les composés suivants :

→ composés de formule (5) avec t = 0, u = 0, r = 2 et s = 1 à 20;
→ composés de formule (5) avec t = 1 à 70 , u = 0 , r = 2 et s = 1 à 50;
→ composés de formule (5) avec t = 1 à 70 , u = 2, r = 0 et s = 1 à 50;
→ composés de formule (6) avec w = 1 à 6, de préférence 1 à 4;
→ et leurs mélanges.

A titre d'exemple de POS (B), on peut citer le poly(diméthylsiloxane) (méthylhydrogénosiloxy) $\alpha$, $\omega$ diméthylhydrogénosiloxane, les résines hydrogénosiloxanes de type M'Q.
Les POS (B) peuvent être uniquement formés de motifs de formule (**3**) ou comportent en plus des motifs de formule (**4**).
Les POS (B) peuvent présenter une structure linéaire, ramifiée, cyclique ou en réseau.
La viscosité dynamique $\eta_d$ de ce POS (B) est comprise entre 5 et 1000 mPa.s, de préférence entre 10 et 100 mPa.s.
Le groupe L a la même signification que le groupe Z ci-dessus.
Des exemples de motifs de formule (**3**) sont : $H(CH_3)_2SiO_{1/2}$, $HCH_3SiO_{2/2}$, $H(C_6H_5)SiO_{2/2}$.
Les exemples de motifs de formule (**4**) sont les mêmes que ceux donnés plus haut pour les motifs de formule (**2**).
Des exemples de POS (B) sont :

- les diméthylpolysiloxanes à extrémités hydrogénodiméthylsilyle,
- les copolymères à motifs (diméthyl)-(hydrogénométhyl)polysiloxanes à extrémités triméthylsilyle,
- les copolymères à motifs diméthyl-hydrogénométhylpolysiloxanes à extrémités hydrogénodiméthylsilyle,
- les hydrogénométhylpolysiloxanes à extrémités triméthylsilyle,
- les hydrogénométhylpolysiloxanes cycliques,
- les résines hydrogénosiloxaniques comportant des motifs siloxyles M : $R_3SiO_{1/2}$, Q : $SiO_{4/2}$ et/ou T : $RSiO_{3/2}$, éventuellement D : $-R_2SiO_{2/2}$, avec R = H ou répondant à la même définition que L.

La concentration $C_B$ en espèce (B) (en parties en poids pour 100 parties en poids de (A)) est telle que $200 \geq C_B \geq 30$.
Comme autres exemples de groupes hydrocarbonés Z Z" ou L, monovalents susceptibles d'être présents dans les POS (A) (A") / (B) susvisés, on peut citer: le méthyle, l'éthyle ; le n-propyle ; l'i-propyle ;le n-butyle ; i-butyle ; t-butyle ; chlorométhyle ; dichlorométhyle ; $\alpha$-chloroéthyle ; $\alpha$, $\beta$-dichloroéthyle ; fluorométhyle ; difluorométhyle ; $\alpha$, $\beta$-difluoroéthyle ; trifluoro-3,3,3-propyle ; trifluoro cyclopropyle ; trifluoro-4,4,4 butyle ; hexafluoro-3,3,5,5,5,5 pentyle ; $\beta$-cyanoéthyle, $\gamma$-cyanopropyle ; phényle ; p-chlorophényle ; m-chlorophényle ; dichloro-3,5-phényle ; trichlorophényle ; tétrachlorophényle ; o-, p- ou m-tolyle ; $\alpha$, $\alpha$, $\alpha$-trifluorotolyle ; xylyles comme diméthyle-2,3 phényle ; diméthyle-3,4-phényle.
Ces groupements peuvent être éventuellement halogénés, ou bien encore être choisis parmi les radicaux cyanoalkyles.
Les halogènes sont par exemple le fluor, le chlore, le brome et l'iode, de préférence le chlore ou le fluor.
Les POS (A) (A") ou (B) peuvent être constitués de mélanges de différentes huiles silicone.
La réaction de polyaddition propre au mécanisme de réticulation du vernis selon l'invention est bien connue par l'homme du métier. On peut d'ailleurs utiliser un catalyseur (C) dans cette réaction. Ce catalyseur (C) peut notamment être choisi parmi les composés du platine et du rhodium. On peut, en particulier, utiliser les complexes du platine et d'un produit organique décrit dans les brevets US-A-3 159 601, US-A-3 159 602, US-A-3 220 972 et les brevets européens EP-A-0 057 459, EP-A-0 188 978 et EP-A-0 190 530, les complexes du platine et d'organosiloxanes vinylés décrits dans les brevets US-A-3 419 593, US-A-3 715 334, US-A-3 377 432 et US-A-3 814 730. Le catalyseur généralement préféré est le platine. Dans ce cas, la quantité pondérale de catalyseur (C), calculée en poids de platine-métal, est généralement comprise entre 2 et 400 ppm, de préférence entre 5 et 100 ppm basés sur le poids total des POS (A & A'), (B & B').
Le composant particulaire (D) facultatif est, selon une alternative avantageuse, sélectionné dans le groupe des poudres comprenant des particules, de préférence sensiblement sphériques, dont le diamètre est de préférence 1 à 2 fois l'épaisseur de la couche de vernis susceptible d'être réalisée à partir de ladite composition et dont la densité est avantageusement comparable à celle de la composition silicone.
Plus préférentiellement encore, le composant particulaire (D) qu'elle comprend est sélectionné :

- dans le groupe des particules non agrégées (éventuellement creuses voire expansibles), en poudre ou en suspension dans des solvants adaptés, et choisies en particulier :

  * dans le groupe des poudres de (co)polyamides - de préférence les (co) polyamides 6, 12 et 6/12- comprenant des particules de forme sensiblement arrondie et de diamètre moyen Φmd compris entre 0,1 et 50 µm, de préférence entre 0,5 et 20 µm et, plus préférentiellement encore entre 1 et 15 µm;
  * et/ou dans le groupe des poudres de silice ayant un diamètre moyen de particules Φmd voisin ou inférieur à 5 µm; ces silices étant avantageusement des silices colloïdales, des silices de combustion, et des silices de précipitation ou leurs mélanges;
  * et/ou dans le groupe des oxydes métalliques, de préférence de titane, de cérium ou d'aluminium $Al_2O_3$ ou $Al(OH)_3$ (alumine hydratée), ou encore des poudres de mica;

- dans le groupe des particules structurées en poudre ou en suspension dans des solvants adaptés, en particulier dans le groupe des poudres de silices renforçantes telles que la silice de pyrohydrolyse traitée ;
- et dans leurs mélanges.

Suivant une caractéristique préférée de l'invention, le composant particulaire (D) quand il est du groupe des poudres de (co)polyamides, est présent à raison 0,1 à 20 % p/p par rapport à la masse totale de la composition de vernis. Cette quantité limitée traduit le fait que ce composant ne peut pas être assimilé à une charge influençant les qualités mécaniques et les propriétés d'usage du support vernis.
Suivant une autre caractéristique préférée de l'invention, le composant particulaire (D) quand il est du groupe des silices, est présent à raison 0,001 à 5 % p/p par rapport à la masse totale de la composition.
Ces charges (D) peuvent avantageusement être traitées par un agent de compatibilisation tel que par exemple des organosilanes ou siloxanes ou silazanes
Sur le plan pondéral on préfère mettre en oeuvre une quantité de ce composant de 0,001 à 10 parties, de préférence entre 1 et 5 parties.
Les inhibiteurs de la réaction d'addition (E), sont de préférence choisis parmi les composés suivants :

- polyorganosiloxanes, avantageusement cycliques et substitués par au moins un alcényle, le tétraméthylvinyltétrasiloxane et le divinyltétraméthyledisiloxane étant particulièrement préférés,
- la pyridine,
- les phosphines et les phosphites organiques,
- les amides insaturés,
- les maléates alkylés,
- et les alcools acétyléniques.

Ces alcools acétyléniques, (Cf. FR-B-1 528 464 et FR-A-2 372 874), qui font partie des bloqueurs thermiques de réaction d'hydrosilylation préférés, ont pour formule :

$$R\text{-}(R')C(OH)\text{-}C{\equiv}CH$$

formule dans laquelle :

- R est un radical alkyle linéaire ou ramifié, ou un radical phényle ;
- R' est H ou un radical alkyle linéaire ou ramifié, ou un radical phényle ;
- les radicaux R, R' et l'atome de carbone situé en α de la triple liaison pouvant éventuellement former un cycle ;
- le nombre total d'atomes de carbone contenu dans R et R' étant d'au moins 5, de préférence de 9 à 20.

Lesdits alcools sont, de préférence, choisis parmi ceux présentant un point d'ébullition supérieur à 250°C. On peut citer à titre d'exemples :

- l'éthynyl-1-cyclohexanol 1 ;
- le méthyl-3 dodécyne-1 ol-3 ;
- le triméthyl-3,7,11 dodécyne-1 ol-3 ;
- le diphényl-1,1 propyne-2 ol-1 ;
- l'éthyl-3 éthyl-6 nonyne-1 ol-3 ;
- le méthyl-3 pentadécyne-1 ol-3.

Ces alcools α-acétyléniques sont des produits du commerce.

Un tel inhibiteur (E) est présent à raison de 3 000 ppm au maximum, de préférence à raison de 100 à 2000 ppm par rapport au poids total des organopolysiloxanes (A) et (B).

Suivant une autre caractéristique préférée (mais néanmoins facultative), la composition selon l'invention peut se présenter sous forme d'une solution dans au moins un solvant (F), de préférence choisi dans le groupe comprenant les solvants siloxaniques -en particulier l'HexaMéthylDiSiloxane (HMDS)-, les solvants organiques, avantageusement les aromatiques - en particulier le xylène - et/ou les alcanes - en particulier le white spirit®.-, et leurs mélanges.

Avantageusement, dès lors qu'elle comporte du solvant (F), la composition selon l'invention peut être caractérisée en ce qu'elle est obtenue en mettant en oeuvre une solution de résine POS (A) et en ce que le solvant (F) est au moins en partie celui de cette solution de résine POS (A).

Préférence peut être donnée selon l'invention à des compositions dont la concentration $C_F$ en solvant F (exprimé en p/p par rapport au mélange final) est telle que :

→ $10 \leq C_F \leq 80$
→ de préférence $15 \leq C_F \leq 65$
→ et plus préférentiellement encore $20 \leq C_F \leq 60$.

Lorsqu'il est nécessaire, le choix du promoteur d'adhérence (G) dépend du substrat où est appliqué le vernis. Il s'agit généralement d'organosilanes alcoxylés fonctionnels. Ces silanes sont souvent associés à des catalyseurs qui favorisent leur condensation. Il peut par exemple comprendre un ou plusieurs organosilanes alcoxylés tels que le VTMS, le γ-méthacryloxypropyltriméthoxysilane et/ou un ou plusieurs composés organosiliciés époxydés tels que le GLYMO et/ou un ou plusieurs chélates et/ou alcoxydes métalliques tels que le titanate de tertio-butyle.

Par ailleurs, quand il est intégré dans la formule, ce promoteur d'adhérence (G) est de préférence présent à raison de 0,1 à 10 %, de préférence 0,5 à 5 % et plus préférentiellement encore 1 à 2,5 % en poids par rapport à l'ensemble des constituants de la préparation.

Concernant les éventuels additifs fonctionnels (H) susceptibles d'être mis en oeuvre, il peut s'agir de produits couvrants tels que par exemple des modificateurs d'aspect (pigments/colorants), des stabilisants, des protecteurs (antifongique, anti-feu, antiUV, thermique...), des hydrophilisants, des épaississants, des plastifiants ou des charges...Quand les préparations utilisées dans le procédé selon l'invention comprennent une charge, elle est de préférence minérale. Elle peut être constituée par des produits choisis parmi les matières siliceuses (ou non). Les charges siliceuses telles que des terres de diatomées ou du quartz broyé, peuvent ainsi être employées. Par ailleurs des exemples de charges non siliceuses utilisables seules ou en mélange sont le noir de carbone, le dioxyde de titane, l'oxyde d'aluminium, l'alumine hydratée, la vermiculite expansée, le zircone, un zirconate, la vermiculite non expansée, le carbonate de calcium, l'oxyde de zinc, le mica, le talc, l'oxyde de fer, le sulfate de baryum et la chaux éteinte. Ces charges ont une granulométrie généralement comprise entre 0,01 et 10 μm et une surface BET inférieure à 100 $m^2/g$. Il est à noter que la pigmentation peut être complétée, par exemple au moment de l'utilisation.

La viscosité du vernis liquide non réticulé tel qu'il est appliqué sur le support est ajustable par la dilution avec les solvants en fonction des procédés de dépose utilisés. Ainsi, la viscosité dynamique η (mPa.s à 25°C) de la composition diluée dans un solvant avant application est par exemple :

| | |
|---|---|
| | $2 \leq \eta \leq 500$, |
| de préférence | $5 \leq \eta \leq 200$, |
| et plus préférentiellement encore | $10 \leq \eta \leq 150$. |

La viscosité dynamique à 25°C, de tous les polymères silicones considérés dans le présent exposé, peut être mesurée à l'aide d'un viscosimètre BROOKFIELD, selon la norme AFNOR NFT 76 102 de février 1972. S'agissant de produits très fluides, la viscosité dont il est question dans le présent exposé est la viscosité dynamique à 25°C, dite "Newtonienne", c'est-à-dire la viscosité dynamique qui est mesurée, de manière connue en soi, à un gradient de vitesse de cisaillement suffisamment faible pour que la viscosité mesurée soit indépendante du gradient de vitesse.

La composition de vernis préférée est du type de celles réticulables par polyaddition et comprend :

- A- 100 parties en poids de résine POS (A) sèche, de préférence de formule $MM^{Vi}Q$,
- B- 35 à 150 parties en poids de POS (B) de préférence de formule $(M^H)_{(2w+2)}\ Q_w$ avec w = 1 à 6, et encore plus préférentiellement de formule $(M^H)_v\ Q$ avec v=1 à 4 (e.g. 4),
- C- 0.0005 à 0.1 en pds de Pt à titre de de catalyseur (C),
- D1- 0 à 50 parties en poids d'au moins un composant particulaire (D1) choisi dans le groupe des poudres de (co)polyamides,

◦ D2- 0 à 50 parties en poids d'au moins un composant particulaire (D2) choisi dans le groupe des poudres de silice,
◦ D3- 0 à 50 parties en poids d'au moins un composant particulaire (D3) choisi dans le groupe des poudres de silice renforçantes,
◦ D4- 0 à 50 parties en poids d'au moins un composant particulaire (D4) choisi dans le groupe des poudres d'oxydes métalliques, de préférence de titane, de cérium ou d'aluminium $Al_2O_3$ (alumine hydratée), ou encore des poudres de mica,
◦ E- 0,01 à 1, parties en poids d'au moins un inhibiteur de réticulation (E) utile notamment comme régulateur
◦ F- 0 à 800 parties en poids au moins un solvant (F),
◦ G- 0 à 5 parties en poids d'au moins un promoteur d'adhérence (G);
◦ H- 0 à 5, de préférence 0 à 10 parties en poids d'au moins un additif fonctionnel (H), (par exemple 0 à 3 parties en poids d'au moins un épaississant).

Pour des raisons de conservation, la composition de vernis est avantageusement présentée sous la forme d'un système au moins bicomposant dont le mélange est apte à réticuler rapidement à chaud par polyaddition. Les ingrédients sont alors répartis dans les différentes parties selon les règles de l'homme de l'art ; en particulier le catalyseur est séparé du composant qui comporte les hydrogénosiloxanes.
Compte tenu de sa facilité d'obtention de son faible coût et de ses propriétés anti-salissures, la composition de vernis silicone selon l'invention est susceptible d'avoir des débouchés dans de nombreux domaines d'application et en particulier on peut citer:

◦ des supports avec une âme fibreuse tissée ou non éventuellement siliconée (i.e. revêtue sur au moins une de ses faces d'au moins une couche d'élastomère) ;
◦ ou bien encore des supports constitués par des pièces massives en silicone et/ou siliconées.

Selon un autre de ses aspects, l'invention concerne un procédé de vernissage d'un support, caractérisé en ce que l'on applique la composition telle que définie ci-dessus, à titre de vernis, en particulier anti-salissures, sur la surface dudit support.
Selon une variante, le support comprend du silicone, de préférence du silicone élastomère, ce silicone formant avantageusement au moins un revêtement dudit support et le vernis est appliqué à la surface du silicone. En clair, il peut s'agir d'un support au moins en partie revêtu d'au moins une couche d'élastomère ou d'une pièce en silicone.
Selon une autre variante, le procédé de vernissage d'un support, notamment un textile enduit, est caractérisé en ce que l'on applique la composition telle que définie supra, à titre de vernis, en particulier anti-salissures, sur la surface dudit support, cette surface comprenant au moins un (co)polymère non silicone, de préférence sélectionné dans le groupe comprenant : les polyamides, les polyoléfines (par exemple le PVC), les polyesters, leurs copolymères et leurs mélanges.
De préférence, ce procédé consiste essentiellement :

- à enduire le support à l'aide de la composition de vernis telle que définie ci-dessus,
- à évaporer le solvant
- et à faire réticuler la couche de vernis, éventuellement en activant thermiquement la réticulation.

Suivant une disposition avantageuse de l'invention, la composition du vernis est appliquée sur le support selon un taux de dépôt inférieur ou égal à 15 $g/m^2$, de préférence compris entre 0,5 et $5g/m^2$.
Concernant l'aspect l'utilisation de la composition de vernis selon l'invention, elle peut être par exemple appliquée sur un support par tout moyen d'enduction ou de transfert approprié (par exemple racle, cylindre d'enduction, héliogravure, sérigraphie dynamique, pinceau, pulvérisation : pistolet, etc...).
La réticulation de la composition silicone liquide de vernis appliquée sur le support à revêtir, est généralement activée par exemple en chauffant la surface du support ainsi revêtu, à une température comprise entre 50 et 200° C, en tenant bien évidemment compte de la résistance maximale du support à la chaleur.
Les moyens d'activation sont du type de ceux connus et appropriés à cette fin, par exemple thermique ou rayonnement I.R.
D'autres détails seront donnés à cet égard dans les exemples qui suivent.
La présente invention concerne également le support vernis (ou composite) doté de propriétés anti-salissures et susceptible d'être obtenu par le procédé tel que visé supra. Ce composite est caractérisé en ce qu'il comprend

◦ un support de préférence souple, et plus préférentiellement encore choisi dans le groupe comprenant :
  ⇨ les textiles,

⇨ les supports fibreux non tissés,

⇨ les films polymères, en particulier polyester, polyamide, polyoléfine, polyuréthanne, polychlorure de vinyle de silicone,

◦ éventuellement un revêtement solidaire d'au moins l'une des faces du support et constitué d'au moins une couche d'élastomère silicone et/ou d'au moins un autre (co)polymère,

◦ et au moins une couche de vernis comprenant la composition telle que définie ci-dessus.

Les supports souples concernés par l'invention peuvent être, entre autres, ceux cités ci-avant.

Suivant une possibilité de mise en oeuvre, le composite selon l'invention peut être caractérisé en ce que le support comporte au moins un revêtement sur au moins l'une de ses faces, ce revêtement comprenant au moins une couche d'élastomère silicone et/ou d'au moins un autre (co)polymère et en ce que le vernis a une épaisseur inférieure ou égale à 15 $\mu$m, de préférence à 5 $\mu$m.

Suivant une autre possibilité de mise en oeuvre, le composite selon l'invention (susceptible d'être obtenu par le procédé susdéfini), peut être caractérisé en ce qu'il comprend :

- un support massif éventuellement en silicone et/ou au moins partiellement revêtu de silicone, le silicone étant de préférence un élastomère silicone,
- et au moins une couche de vernis comprenant la composition selon l'invention telle que définie ci-desssus.

Le revêtement silicone est facultatif, par exemple dès lors que le support est lui-même silicone.

Avantageusement, le composite selon l'invention peut inclure un support comprenant au moins un matériau choisi dans le groupe comprenant :

- le verre sous forme massique ou sous forme de fibres,
- les céramiques sous forme massique ou sous forme de fibres,
- les polymères naturels ou synthétiques, se présentant sous forme massique, sous forme de fibres, ou sous forme de films en particulier polyester, polyamide, polyuréthanne, polychlorure de vinyle ou silicone,
- les matières cellulosiques, ligno-cellulosiques sans forme massique ou fibreuse, en particulier les papiers, cartons ou analogues,
- et leurs associations.

Les supports fibreux destinés à être enduits puis vernis conformément à l'invention, peuvent être par exemple des tissus, des non-tissés ou des tricots ou plus généralement tout support fibreux comprenant des fibres choisies dans le groupe de matériaux comprenant : le verre, la silice, les métaux, la céramique, le carbure de silicium, le carbone, le bore, les fibres naturelles comme le coton, la laine, le chanvre, le lin, les fibres artificielles comme la viscose, ou des fibres cellulosiques, les fibres synthétiques comme les polyesters, les polyamides, les polyacryliques, les chlorofibres, les polyoléfines, les caoutchoucs synthétiques, l'alcool polyvinylique, les aramides, les fluorofibres, les phénoliques, les silicones......

A titre d'exemples préférés de supports fibreux, on peut citer les tissus de verre, de polyester, de polyamide, de polyuréthanne, de polyoléfine, de polychlorure de vinyle ou de silicone, ou bien encore les papiers, cartons ou analogues.

Outre les supports souples textiles revêtus de silicone, le vernis anti-salissures selon l'invention peut être appliqué sur des films plastiques (par exemple d'emballage de protection), e.g. en polyester, polyuréthanne, polyamide, polyoléfine (polyéthylène, polypropylène), polychlorure de vinyle, ou de silicone. Ces supports sont éventuellement activés pour favoriser l'ancrage du vernis, un traitement d'activation étant par exemple le traitement "Corona".

Les supports massifs concernés par l'invention peuvent être, entre autres, des pièces choisies dans le groupe comprenant :

- mobiliers,
- bardages,
- écrans publicitaires,
- de brise-vent,
- compensateurs (manchons flexibles d'étanchéité pour tuyauterie),
- ou panneaux filtrants.

Selon un autre de ses objets, l'invention englobe les articles manufacturés comportant au moins un composite susceptible d'être obtenu par le procédé ou au moins un composite selon l'invention tels que définis ci-dessus.

Parmi ces articles manufacturés figure tout article comprenant au moins un composite susceptible d'être obtenu par le procédé ou au moins un composite selon l'invention tels que définis supra.

Selon encore un autre de ses objets, l'invention comprend l'utilisation de la composition susdéfinie, à titre de vernis, en particulier anti-salissures, sur une surface silicone ou non silicone, notamment pour fabriquer des articles manufacturés.

Le silicone susceptible de former le revêtement ou la pièce massique sur lequel la composition de vernis selon l'invention est susceptible d'être appliquée, peut être un élastomère à base de polyorganosiloxane(s), réticulable ou au moins partiellement réticulé, et de préférence choisi parmi :

- les silicones RTV polyaddition ou polycondensation,
- et/ou les silicones EVC au peroxyde ou de polyaddition,
- et/ou les silicones LSR polyaddition.

Le vernis anti-salissures obtenu à partir de la composition, telle que définie supra, est appliqué sur la (ou les) couche(s) (supérieure(s)) d'élastomère silicone.

Les expressions RTV, LSR, EVC sont bien connues de l'homme du métier : RTV est l'abréviation de "Room Temperature Vulcanising"; LSR est l'abréviation de "Liquid Silicone Rubber" ; EVC est l'abréviation de : "Elastomère Vulcanisable à Chaud".

En pratique, l'invention vise plus précisément les supports (par exemple textiles tels que ceux utilisés pour la fabrication "d'airbags") revêtus sur l'une et/ou l'autre de leurs faces d'une couche d'élastomère silicone réticulé RTV, EVC ou LSR, elle-même enduite d'un revêtement de vernis silicone anti-salissures tel que défini ci-dessus.

Le problème de l'apport de propriétés anti-salissures est particulièrement aigu s'agissant de ces pièces ou revêtements élastomères silicones réticulées puisque comme cela a déjà été indiqué ci-dessus, ces dernières ont pour caractéristique d'avoir un toucher collant.

Les polyorganosiloxanes, constituants principaux des couches collantes d'élastomères réticulés ou des supports/pièces massifs sur lesquels le vernis selon l'invention est susceptible d'être appliqué, peuvent être linéaires, ramifiés ou réticulés, et comporter des radicaux hydrocarbonés et/ou des groupements réactifs comme par exemple des groupes hydroxyles, des groupements hydrolysables, des groupements alkényles et des atomes d'hydrogène. A noter que les compositions polyorganosiloxanes sont amplement décrites dans la littérature et notamment dans l'ouvrage de Walter NOLL : "Chemistry and Technology of Silicones", Academic Press, 1968, 2ème édition, pages 386 à 409.

Il est possible d'utiliser une grande variété de compositions monocomposantes ou bicomposantes réticulant par des réactions de polyaddition ou de polycondensation, en présence d'un catalyseur métallique et éventuellement d'une amine et d'un agent de réticulation.

Les compositions polyorganosiloxanes bicomposantes ou mono-composantes réticulant à température ambiante (RTV) ou à la chaleur (EVC) par des réactions de polyaddition, essentiellement par réaction de groupements hydrogénosilylés sur des groupements alkénylsilylés, en présence généralement d'un catalyseur métallique, de préférence au platine, sont décrites par exemple dans les brevets US-A-3 220 972, 3 284 406, 3 436 366, 3 697 473 et 4 340 709.

Les compositions polyorganosiloxanes bicomposantes ou monocomposantes réticulant à température ambiante (RTV) par des réactions de polycondensation sous l'action de l'humidité, en présence généralement d'un catalyseur métallique, par exemple un composé de l'étain sont décrites par exemple pour les compositions monocomposantes dans les brevets US-A-3 065 194, 3 542 901, 3 779 986, 4 417 042, et dans le brevet FR-A-2 638 752, et pour les compositions bicomposantes dans les brevets US-A-3 678 002, 3 888 815, 3 933 729 et 4 064 096. Les polyorganosiloxanes entrant dans ces compositions sont en général des polysiloxanes linéaires, ramifiés ou réticulés. Ces compositions polyorganosiloxanes RTV qui réticulent par des réactions de polyaddition ou de polycondensation, présentent avantageusement une viscosité à 25°C au plus égale à 100 000 mPa.s et, de préférence, comprise entre 5000 et 50 000 mPa.s.

Il est possible de mettre en oeuvre des compositions RTV réticulant à température ambiante par des réactions de polyaddition ou de polycondensation, ayant une viscosité à 25°C supérieure à 100 000 mPa.s, comme celle se situant dans l'intervalle allant d'une valeur supérieure à 100 000 mPa.s à 300 000 mPa.s ; cette modalité est recommandée lorsque l'on souhaite préparer des compositions durcissables chargées dans lesquelles la (ou les) charge(s) utilisée(s) a (ont) tendance à se séparer par sédimentation.

Il est également possible de mettre en oeuvre, des compositions réticulant à la chaleur par des réactions de polyaddition et plus précisément de compositions dites de type EVC de polyaddition, ayant une viscosité à 25°C au moins égale à 500 000 mPa.s et, de préférence comprise entre 1 million de mPa.s et 10 millions de mPa.s et même davantage.

Il peut aussi s'agir de compositions durcissables à température élevée sous l'action de peroxydes organiques

tels que le peroxyde de dichloro-2,4 benzoyle, le peroxyde de benzoyle, le perbenzoate de t-butyle, le peroxyde de cumyle, le peroxyde de di-t-butyle. Le polyorganosiloxane ou gomme entrant dans de telles compositions (dénommées simplement de type EVC) est alors constitué essentiellement de motifs siloxyles (I'), éventuellement associés à des motifs (II') dans lesquels le reste Z° représente un groupement alkényle en $C_2$ - $C_6$ et où x est égal à 1. De tels EVC sont par exemple décrits dans les brevets US-A-3 142 655, 3 821 140, 3 836 489 et 3 839 266). Ces compositions présentent avantageusement une viscosité à 25° C au moins égale à 1 million de mPa.s et, de préférence, comprise entre 2 millions et 10 millions de mPa.s et même davantage.

D'autres compositions polyorganosiloxanes vernissables par la composition de vernis silicone selon l'invention sont celles, monocomposantes ou bicomposantes, réticulant à la chaleur par des réactions de polyaddition, appelées compositions LSR. Ces compositions répondent aux définitions données ci-avant à propos des compositions préférées appelées RTV, sauf en ce qui concerne leur viscosité qui se situe cette fois dans l'intervalle allant d'une valeur supérieure à 100 000 mPa.s à plus de 500 000 mPa.s.

Sans que cela ne soit limitatif, les revêtements silicones élastomères sur lesquels le vernis anti-salissures selon l'invention peut être appliqué, sont plus spécialement des revêtements obtenus à partir de compositions élastomères silicones vulcanisables à froid RTV, en particulier de type bicomposant (RTV 2), par polyaddition.

Les exemples présentés démontrent la performance du vernis selon l'invention et ses avantages par rapport à l'art antérieur.

**EXEMPLES :**

**Aspects expérimentaux**

**Support textile**

L'échantillon support est une enduction de RTV II appliquée sur un support textile *du type* tissu de verre. L'épaisseur de l'enduction est suffisante (env 250μm) pour que la surface enduite soit lisse et que la nature du tissu utilisée devienne totalement écrantée.

La composition du RTV-II utilisée est le RHODORSIL ® TCS 7534 commercialisée par la société Rhodia Silicones. Au laboratoire, sa réticulation sur le support considéré est effectuée par séjour de 2 minutes dans une étuve ventilée maintenue à 160°C.

**Vernissage**

Au laboratoire, le vernis est appliqué sur le support siliconé au moyen d'une barre de Mayer appropriée pour un dépôt de l'ordre de 5g/$m^2$; la réticulation est effectuée par séjour dans une étuve ventilée à 180°C pendant 2 minutes. Pour mieux ajuster le poids surfacique de vernis déposé ce dernier peut être dilué par un solvant ; on utilise avantageusement l'HexaMéthylDiSiloxane en coupage ou non à du White Spirit.

**Caractérisation du vernis**

La viscosité dynamique à 25°C du vernis liquide non réticulé appliqué sur le support est mesurée à l'aide d'un viscosimètre BROOKFIELD, selon les conditions A3V100 (aiguille n° 3, vitesse 100).

La qualité de la réticulation alliée à l'appréciation du bon recouvrement du tissu sont évaluées par une mesure du glissant de surface. On peut avoir une appréciation qualitative résultant de l'observation quand on tente de faire glisser l'échantillon sur une plaque de verre. Pour cela on détermine le Coefficient de Friction (CoF) du complexe vernis au contact d'une plaque de verre ; On opère dans une géométrie plane avec une surface de contact de 10x5cm avec une charge de 200g.

**Test de résistance à la salissure**

Le jugement de la qualité du recouvrement du tissu siliconé par le vernis et sa résistance à la salissure se font grâce à un test d'encrassement par du noir de fumée ; le noir de fumée est déposé sur l'échantillon à tester au moyen d'un pinceau et il est étalé par essuyage avec un voile de ouate de cellulose. La planche de référence suivante sert à la cotation.

RESISTANCE A LA SALISSURE – classement de 0 à 5 : du plus au moins salissant

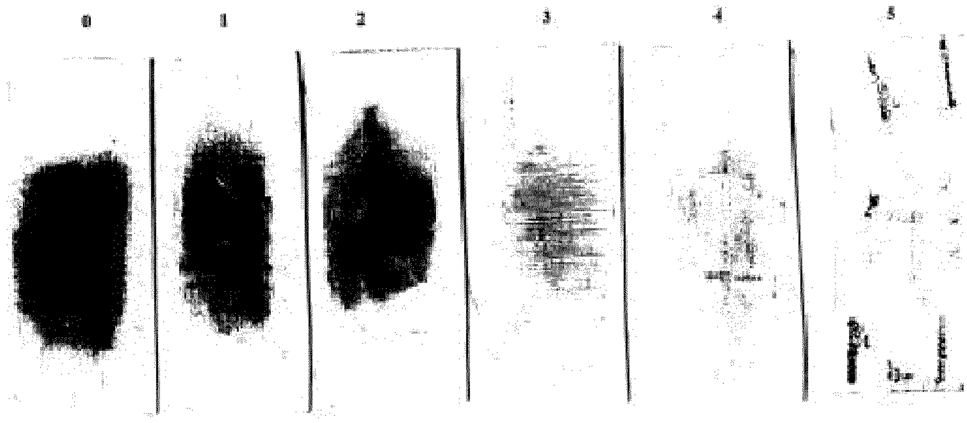


## Vernis Silicone de poly Addition AntiSalissure

**Matières premières**

**Résine A1**

Une résine silicone $MD^{Vi}Q$ à 60% dans le xylène où :

- groupements M = $[0_{1/2}Si(CH_3)_3]$
- groupements $D^{Vi}$ = $[0_{1/2}SiCH_3C_2H_3]$
- groupements Q = $[0_{4/2}Si]$

et portant en moyenne 2,5% de groupements $-CH=CH_2$

**Résine A2**

Une résine silicone $MM^{Vi}Q$ à 60% dans le xylène et comportant :

- groupements M = $[0_{1/2}Si(CH_3)_3]$
- groupements $M^{Vi}$ = $[0_{1/2}Si(CH_3)_2C_2H_3]$
- groupements Q = $[0_{4/2}Si]$

et portant en moyenne 2,5% de groupements $-CH=CH_2$

**Réticulant B1**

Un PolyDiMéthylSiloxane à terminaisons $[0_{1/2}Si(CH_3)_2H]$ qui titré à 5,5% de groupements SiH en poids.

**Réticulant B2**

Un PolyOrganoSiloxane à terminaisons $[0_{1/2}Si(CH_3)_2H]$ qui titré à 25% de groupements SiH en poids

**Réticulant B3**

Un PolyMéthylHydrogénoSiloxane à terminaisons $[0_{1/2}Si(CH_3)_3]$ de viscosité 20 mPa.s

**Catalyseur C**

Un complexe de Karstedt titrant 10% en poids de platine métal.

**Inhibiteur de réticulation E également dénommé ci-après Régulateur**

L'EthynylCycloHexanol.

**Charge D1**

Des billes de PolyAmide 12 de 10μm de diamètre moyen commercialisées sous la référence Orgasol® 2001 EXD NAT1 par la société Arkéma.

**Charge D2**

Une silice de pyrohydrolyse affichant 260m$^2$/g et traitée à hauteur de 2,5% exprimés en carbone, commercialisée sous la référence Aerosil R812 par la société Degussa.

**Exemples :**

**Exemples 1 à 7**

Les compositions du Tableau 1 ci-dessous sont appliquées dans les conditions décrites. On évalue qualitativement le caractère glissant et la résistance à la salissure selon la planche présentée.

Tableau 1

| | **parties en poids** | | | | | | |
|---|---|---|---|---|---|---|---|
| | **Comp.** | **Inv.** | **Inv.** | **Comp.** | **Comp.** | **Comp.** | **Inv.** |
| **Résine A1** | **100** | **100** | **100** | **100** | | | |
| **Résine A2** | | | | | **100** | **100** | **100** |
| **Réticulant B1** | **12** | | | | | | |
| **Réticulant B2** | **5,5** | **42** | **100** | | **6** | **18** | **42** |
| **Réticulant B3** | | | | **55** | | | |
| **Catalyseur C** | **0,1** | **0,1** | **0,1** | **0,1** | **0,1** | **0,1** | **0,1** |
| **Inhibiteur/Ré gulateur E** | **0,1** | **0,1** | **0,1** | **0,1** | **0,1** | **0,1** | **0,1** |
| **Viscosité (mPa.s)** | | **9** | **10** | | **8** | | **10** |
| **Glissant** | **N** | **N** | **O** | **N** | **N** | **N** | **O** |
| **Salissure** | **2-3** | **4** | **4** | **3** | **2** | **3** | **4** |

Ces essais nous enseignent qu'un fort taux de réticulant B est nécessaire à l'obtention d'un vernis qui offre à la fois un bon glissant de surface et une résistance à la salissure élevée. Par ailleurs la Résine A2 semble nécessiter moins de réticulant que la Résine A1 et le Réticulant B2 apparaît le plus avantageux.

**Exemples 8 à 10**

Les compositions du Tableau 2 ci-dessous sont appliquées dans les conditions décrites. On évalue qualitativement le Coefficient de friction (CoF) et la résistance à la salissure selon la planche présentée.

Tableau 2

| | **parties en poids** | | |
|---|---|---|---|
| **Résine A1** | **70** | | |
| **Résine A2** | | **70** | **70** |

(suite)

| | parties en poids | | |
|---|---|---|---|
| **Réticulant B2** | **30** | **30** | **30** |
| **Charge D1** | **1** | **1** | **1** |
| **Charge D2** | | | **10** |
| **Catalyseur C** | **0,02** | **0,02** | **0,02** |
| **Inhibiteur/ Régulateur E Régulateur** | **0,02** | **0,02** | **0,02** |
| **Viscosité (mPa.s)** | **14** | | |
| **CoF** | **0,6** | **0,5** | **0,4** |
| **Salissure** | **2** | **4** | **4-5** |

Ces essais confirment le bénéfice de la Résine A2 par rapport à la résine A1 et montrent l'avantage à l'utilisation des charges D1 & D2.

## Revendications

1. Composition silicone réticulable par polyaddition et comprenant:

▪ au moins deux espèces organosiliciées réactives (A), (B) entre elles en présence d'un catalyseur (C) métallique pour permettre la réticulation par polyaddition, ces deux espèces étant constituées par des polyorganosiloxanes (POS);
▪ au moins un inhibiteur de réticulation (E),
**caractérisée en ce que**

→ l'espèce (A) comporte au moins une résine POS présentant, par molécule, au moins un groupe alcényle, en C2-C6 liés au silicium et comprenant au moins deux motifs siloxy différents choisis parmi ceux de formules:

$$W_aZ_bSiO_{(4-(a+b))/2} \qquad \textbf{(1)}$$

dans laquelle :

- les symboles W, identiques ou différents, représentent chacun un groupe alcényle;
- les symboles Z, identiques ou différents, représentent chacun un groupe hydrocarboné monovalent non hydrolysable, exempt d'action défavorable sur l'activité du catalyseur choisi parmi les groupes alkyles ainsi que parmi les groupes aryles,
- a est 0, 1 ou 2, b est 0, 1 ou 2 et a + b est compris entre 0 et 3,

éventuellement au moins une partie des autres motifs sont des motifs de formule moyenne :

$$Z_cSiO_{(4-c)/2} \qquad \textbf{(2)}$$

dans laquelle Z a la même signification que ci-dessus et c a une valeur comprise entre 0 et 3;
l'un au moins de ces deux motifs siloxy différents étant un motif T ou Q,

→ l'espèce (B) comporte au moins un réticulant POS, présentant, par molécule, au moins deux atomes d'hydrogène liés au silicium ;
→ le ratio molaire R = SiH/SiVi de l'espèce (B) hydrogéno à l'espèce (A) alcényle est tel que R ≥ 2,;
→ la concentration $C_B$ en espèce (B) (en parties en poids pour 100 parties en poids de (A)) est telle que $200 \geq C_B \geq 30$ ; et
→ la viscosité dynamique η en mPa.s à 25°C de la composition avant application est telle que $2 \leq \eta \leq 500$,

la viscosité dynamique à 25°C étant mesurée à l'aide d'un viscosimètre BROOKFIELD, selon la norme AFNOR NFT 76 102 de février 1972.

**2.** Composition selon la revendication 1, **caractérisée en ce que** la résine POS (A) comprend des molécules constituées de motifs siloxy $M^{Alc}$, M et Q et/ou des molécules constituées de motifs siloxy M, $D^{Alc}$ et Q.

**3.** Composition selon l'une quelconque des revendications précédentes, **caractérisée en ce que** la résine POS (A) a une teneur pondérale en radical(aux) alcényle(s) comprise entre 0,1 et 20 % en poids.

**4.** Composition selon l'une quelconque des revendications précédentes, **caractérisée en ce que** l'espèce (A) comporte en outre un POS (A") hyperalcénylé, ce POS (A") hyperalcénylé comprenant des motifs siloxyle de formule :

$$W''_{a''}Z''_{b''}SiO_{(4-(a''+b''))/2} \qquad \textbf{(1")}$$

dans laquelle :

- les symboles W", identiques ou différents, représentent chacun un groupe alcényle;
- les symboles Z", identiques ou différents, représentent chacun un groupe hydrocarboné monovalent non hydrolysable, exempt d'action défavorable sur l'activité du catalyseur choisi parmi les groupes alkyles ainsi que parmi les groupes aryles,
- a" est 1 ou 2, b" est 0, 1 ou 2 et a" + b" est compris entre 1 et 3,
- éventuellement au moins une partie des autres motifs sont des motifs de formule moyenne :

$$Z''_{c''}SiO_{(4-c'')/2} \qquad \textbf{(2")}$$

dans laquelle Z" a la même signification que ci-dessus et c" a une valeur comprise entre 0 et 3 ;

ce POS (A") hyperalcénylé comprenant des molécules de formule suivante:

$$(M^{Alc})_n(D)_p(D^{Alc})_q(M)_m$$

dans laquelle:

$p \geq 0$, $q > 0$, $n + q \geq 3$,;
$n = 0$, 1 ou 2;
$m = 0$, 1 ou 2.

**5.** Composition selon l'une quelconque des revendications précédentes, **caractérisée en ce que** l'espèce (B) comporte au moins un POS (B) hydrogéné, ce POS (B) comprenant des motifs siloxyle de formule :

$$H_dL_eSiO_{(4-(d+e))/2} \qquad \textbf{(3)}$$

dans laquelle :

- H est l'hydrogène,
- les symboles L, identiques ou différents, représentent chacun un groupe hydrocarboné monovalent non hydrolysable, exempt d'action défavorable sur l'activité du catalyseur,
- d est 1 ou 2, e est 0, 1 ou 2 et d + e a une valeur comprise entre 1 et 3 ;
- éventuellement, au moins une partie des autres motifs étant des motifs de formule moyenne :

$$L_gSiO_{(4-g)/2} \qquad \textbf{(4)}$$

dans laquelle L a la même signification que ci-dessus et g a une valeur comprise entre 0 et 3 ;
ce POS (B) hydrogéné correspondant à des molécules de formules **(5)** et/ou **(6)** suivantes :

$$(M^H)_r(D)_s(D^H)_t(M)_u \ \textbf{(5)}$$

dans laquelle:

$r = 0 - 2$;
$s = 0 - 50$;
$t = 0 - 70$;
$u = 0 - 2$;
$r \geq 0; \geq 0; t \geq 0; u \geq 0; r + t \geq 3$

$$(M^H)_{(2w+2)}Q_w \qquad (6)$$

formule dans laquelle:

w = 1 à 6,.

**6.** Composition selon l'une quelconque des revendications précédentes, **caractérisée en ce qu'**elle comprend un composant particulaire (D), sélectionné dans le groupe des poudres comprenant des particules, dont le diamètre est d'environ 1 à 2 fois l'épaisseur de la couche de vernis susceptible d'être réalisée à partir de ladite composition et dont la densité est avantageusement comparable à celle de la composition silicone.

**7.** Composition selon l'une quelconque des revendications précédentes, **caractérisée en ce que** le composant particulaire (D) qu'elle comprend est sélectionné:

• dans le groupe des particules non agrégées , en poudre ou en suspension dans des solvants adaptés, et choisies:

* dans le groupe des poudres de (co)polyamides comprenant des particules de forme sensiblement arrondie et de diamètre moyen Φmd compris entre 0,1 et 50 µm;
* et/ou dans le groupe des poudres de silice ayant un diamètre moyen de particules Φmd voisin ou inférieur à 5 µm; ces silices étant avantageusement des silices colloïdales, des silices de combustion, des silices de précipitation ou leurs mélanges;
* et/ou dans le groupe des oxydes métalliques, ou encore des poudres de mica;

• dans le groupe des particules structurées en poudre ou en suspension dans des solvants adaptés;
• et dans leurs mélanges.

**8.** Composition selon la revendication 1, **caractérisée en ce qu'**elle se présente sous forme d'une solution dans au moins un solvant (F), choisi dans le groupe comprenant les solvants siloxaniques, les solvants organiques, avantageusement les aromatiques et/ou les alcanes, et leurs mélanges.

**9.** Composition selon la revendication 8, **caractérisée en ce qu'**elle est obtenue en mettant en oeuvre une solution de résine POS (A) et **en ce que** le solvant (F) est au moins en partie celui de cette solution de résine POS (A).

**10.** Composition selon la revendication 8, **caractérisée en ce que** sa concentration $C_F$ en solvant F exprimée en p/p par rapport au mélange final est telle que :

$\rightarrow 10 \leq C_F \leq 80$.

**11.** Composition selon l'une quelconque des revendications précédentes, **caractérisée en ce qu'**elle comprend au moins un promoteur d'adhérence (G).

**12.** Composition selon l'une quelconque des revendications précédentes, **caractérisée en ce qu'**elle comprend :

◦ A- 100 parties en poids de résine POS (A) sèche, de formule $MM^{Vi}Q$,
◦ B- 35 à 150 parties en poids de POS (B) de formule $(M^H)_{(2w+2)}Q_w$ avec w = 1 à 6,
◦ C- 0,0005 à 0,1 en pds de Pt à titre de catalyseur (C),
◦ D1- 0 à 50 parties en poids d'au moins un composant particulaire (D1) choisi dans le groupe des poudres de

(co)polyamides,
- ◦ D2- 0 à 50 parties en poids d'au moins un composant particulaire (D2) choisi dans le groupe des poudres de silice,
- ◦ D3- 0 à 50 parties en poids d'au moins un composant particulaire (D3) choisi dans le groupe des poudres de silice renforçantes,
- ◦ D4- 0 à 50 parties en poids d'au moins un composant particulaire (D4) choisi dans le groupe des poudres d'oxydes métalliques, ou encore des poudres de mica,
- ◦ E- 0,01 à 1 parties en poids d'au moins un inhibiteur de réticulation (E),
- ◦ F- 0 à 800 parties en poids au moins un solvant (F),
- ◦ G- 0 à 5 parties en poids d'au moins un promoteur d'adhérence (G);
- ◦ H- 0 à 5, parties en poids d'au moins un additif fonctionnel (H).

**13.** Procédé de vernissage d'un support, **caractérisé en ce que** l'on applique la composition selon l'une quelconque des revendications 1 à 12, à titre de vernis, sur la surface dudit support.

**14.** Procédé de vernissage selon la revendication 13, **caractérisé en ce que** le support comprend du silicone, ce silicone formant au moins un revêtement dudit support et **en ce que** le vernis est appliqué à la surface du silicone.

**15.** Procédé de vernissage d'un support, **caractérisé en ce que** l'on applique la composition selon l'une quelconque des revendications 1 à 12, à titre de vernis sur la surface dudit support, cette surface comprenant au moins un (co)polymère non silicone sélectionné dans le groupe comprenant : les polyamides, les polyoléfines, les polyesters, leurs mélanges et les copolymères.

**16.** Procédé selon au moins l'une des revendications 13 à 15, **caractérisé en ce qu'**il consiste essentiellement :

- à enduire le support à l'aide de la composition de vernis selon l'une quelconque des revendications 1 à 12,
- et à faire réticuler la couche de vernis, éventuellement en activant thermiquement la réticulation.

**17.** Composite, susceptible d'être obtenu par le procédé selon l'une quelconque des revendications 13 à 16, **caractérisé en ce qu'**il comprend :

- ◦ un support choisi dans le groupe comprenant :
  - ⇨ les textiles,
  - ⇨ les supports fibreux non tissés,
  - ⇨ les films polymères,

- ◦ éventuellement un revêtement solidaire d'au moins l'une des faces du support et comprenant au moins une couche d'élastomère silicone et/ou d'au moins un autre (co)polymère,
- ◦ au moins une couche de vernis comprenant la composition selon l'une quelconque des revendications 1 à 12.

**18.** Composite selon la revendication 17, **caractérisé en ce que** le support comporte au moins un revêtement sur au moins l'une de ses faces, ce revêtement comprenant au moins une couche d'élastomère silicone et/ou d'au moins un autre (co)polymère et **en ce que** le vernis présente une épaisseur inférieure ou égale à 15 $\mu$m.

**19.** Composite susceptible d'être obtenu par le procédé selon l'une quelconque des revendications 13 à 16, **caractérisé en ce qu'**il comprend :

- un support massif éventuellement en silicone et/ou au moins partiellement revêtu de silicone,
- et au moins une couche de vernis comprenant la composition selon l'une quelconque des revendications 1 à 12.

**20.** Composite selon au moins l'une des revendications 17 à 19, **caractérisé en ce que** le support comprend au moins un matériau choisi dans le groupe comprenant :

- le verre sous forme massique ou sous forme de fibres,
- les céramiques sous forme massique ou sous forme de fibres,
- les polymères naturels ou synthétiques, se présentant sous forme massique, sous forme de fibres, ou sous forme de films,

- les matières cellulosiques, ligno-cellulosiques sans forme massique ou fibreuse,
- et leurs associations.

**21.** Article manufacturé, **caractérisé en ce qu'**il comporte au moins un composite susceptible d'être obtenu par le procédé selon l'une quelconque des revendications 13 à 16, ou au moins un composite selon l'une quelconque des revendications 17 à 20.

**22.** Utilisation de la composition selon l'une quelconque des revendications 1 à 12, à titre de vernis, sur une surface silicone ou non silicone, pour fabriquer des articles manufacturés à l'exclusion des textiles architecturaux.

## Patentansprüche

**1.** Silikonzusammensetzung, welche durch Polyaddition vernetzbar ist und umfasst:

- wenigstens zwei organosiliziumhaltige Stoffe (A), (B), die miteinander in Anwesenheit eines metallischen Katalysators (C) reagieren, um die Vernetzung durch Polyaddition zu ermöglichen, wobei die beiden Stoffe durch Polyorganosiloxane (POS) gebildet sind;
- wenigstens einen Vernetzungshemmer (E),

**dadurch gekennzeichnet, dass**

→ der Stoff (A) wenigstens ein POS-Harz umfasst, welches pro Molekül wenigstens eine Alkenylgruppe umfasst, die als C2-C6 an das Silizium gebunden ist und wenigstens zwei unterschiedliche Siloxyeinheiten umfasst, die aus jenen mit folgenden Formeln gewählt sind:

$$W_aZ_bSiO_{(4-(a+b))/2} \quad \textbf{(1)}$$

wobei gilt:

- gleiche oder verschiedene W-Symbole stehen jeweils für eine Alkenylgruppe;
- gleiche oder unterschiedliche Z-Symbole stehen jeweils für eine monovalente, nicht hydrolysierbare Kohlenwasserstoffgruppe, welche keine negativen Auswirkungen auf die Aktivität des Katalysators hat, gewählt aus den Alkylgruppen sowie aus den Arylgruppen,
- a ist gleich 0, 1 oder 2, b ist gleich 0, 1 oder 2 und a+b ist gleich 0 bis 3, wenigstens ein Teil der anderen Einheiten sind gegebenenfalls Einheiten mit der folgenden durchschnittlichen Formel:

$$Z_cSiO_{(4-c)/2} \quad \textbf{(2)}$$

wobei Z die gleiche Bedeutung hat wie oben und c einen Wert zwischen 0 und 3 aufweist;
wenigstens eine der unterschiedlichen Siloxyeinheiten eine T-Einheit oder
eine Q-Einheit ist,

→ der Stoff (B) umfasst wenigstens ein POS-Vernetzungsmittel, welches pro Molekül wenigstens zwei an das Silizium gebundene Wasserstoffatome umfasst;
→ das Molverhältnis R = SiH/SiVi des Hydrogeno-Stoffes (B) zu dem Alkenyl-Stoff (A) ist $R \geq 2$,;
→ die Konzentration $C_B$ in Stoff (B) (in Gewichtsteilen pro 100 Gewichtsteile (A)) ist $200 \geq C_B \geq 30$; und
→ die dynamische Viskosität $\eta$ in mPa.s bei 25 °C der Verbindung vor der Anwendung ist $2 \leq \eta \leq 500$,

wobei die dynamische Viskosität bei 25 °C mittels eines BROOKFIELD Viskosimeters gemäß dem Standard AFNOR NFT 76 102, Februar 1972, gemessen ist.

**2.** Zusammensetzung nach Anspruch 1, **dadurch gekennzeichnet, dass** das POS-Harz (A) Moleküle umfasst, die aus $M^{Alc}$, M und Q-Siloxy -Einheiten bestehen, und/oder Moleküle, die aus M, $D^{Alc}$ und Q-Siloxy -Einheiten bestehen.

**3.** Zusammensetzung nach einem der vorhergehenden Ansprüche, **dadurch gekennzeichnet, dass** das POS-Harz (A) einen Gewichtsgehalt an AlkenylRest(en) umfasst, der zwischen 0,1 und 20 Gewichtsprozent liegt.

**4.** Zusammensetzung nach einem der vorhergehenden Ansprüche, **dadurch gekennzeichnet, dass** der Stoff (A) ferner ein hyperalkenyliertes POS (A") umfasst, wobei dieses hyperalkenylierte POS (A") Siloxyleinheiten mit folgender Formel umfasst:

$$W''_{a''}Z''_{b''}SiO_{(4-(a''+b''))/2} \qquad \mathbf{(1'')}$$

wobei gilt:

- gleiche oder verschiedene W"-Symbole stehen jeweils für eine Alkenylgruppe;
- gleiche oder unterschiedliche Z"-Symbole stehen jeweils für eine monovalente, nicht hydrolysierbare Kohlenwasserstoffgruppe, welche keine negativen Auswirkungen auf die Aktivität des Katalysators hat, gewählt aus den Alkylgruppen sowie aus den Arylgruppen,
- a" ist gleich 1 oder 2, b" ist gleich 0, 1 oder 2 und a"+ b" ist gleich 1 bis 3,
- wenigstens ein Teil der anderen Einheiten sind gegebenenfalls Einheiten mit der folgenden durchschnittlichen Formel:

$$Z''_{c''}SiO_{(4-c'')/2} \qquad \mathbf{(2'')}$$

wobei Z" die gleiche Bedeutung hat wie oben und c" einen Wert zwischen 0 und 3 umfasst;
wobei das hyperalkenylierte POS (A") Moleküle mit folgender Formel umfasst:

$$(M^{Alc})_n(D)_p(O^{Alc})_q(M)_m$$

wobei gilt:

$p \geq 0$, $q \geq 0$, $n + q \geq 3$,;
n = 0, 1 oder 2;
m = 0, 1 oder 2.

**5.** Zusammensetzung nach einem der vorhergehenden Ansprüche, **dadurch gekennzeichnet, dass** der Stoff (B) ferner ein hydriertes POS (B) umfasst, wobei das POS (B) Siloxyleinheiten mit folgender Formel umfasst:

$$H_dL_eSiO_{(4-(d+e))/2} \qquad \mathbf{(3)}$$

wobei gilt:

- H steht für Wasserstoff,
- gleiche oder unterschiedliche L-Symbole stehen jeweils für eine monovalente, nicht hydrolysierbare Kohlenwasserstoffgruppe, welche keine negativen Auswirkungen auf die Aktivität des Katalysators hat
- d ist gleich 1 oder 2, e ist gleich 0, 1 oder 2 und d+e einen Wert zwischen 1 und 3 aufweist;
- dabei sind ggf. wenigstens ein Teil der anderen Einheiten, Einheiten mit der mittleren Formel:

$$L_gSiO_{(4-g)/2} \qquad \mathbf{(4)}$$

wobei L die gleiche Bedeutung hat wie oben und g einen Wert zwischen 0 und 3 aufweist;
wobei das hydrierte POS (B) Molekülen mit den folgenden Formeln (5) und/oder (6) entspricht:

$$(M^H)_r(D)_s(D^H)_t(M)_u \qquad \mathbf{(5)}$$

wobei gilt:

r = 0 - 2;
s = 0 - 50;
t = 0 - 70;
u = 0 - 2;
$r \geq 0$; $s \geq 0$; $t \geq 0$ ; $r + t \geq 3$

$$(M^H)_{(2w+2)}Q_w \quad \textbf{(6)}$$

Formel, mit:

w = 1 bis 6,.

**6.** Zusammensetzung nach einem der vorhergehenden Ansprüche, **dadurch gekennzeichnet, dass** sie eine teilchenförmige Komponente (D) umfasst, gewählt aus der Gruppe der Pulver, die Partikel enthalten, deren Durchmesser ungefähr das ein- bis zweifache der Dicke der Lackschicht umfasst, die mit der Zusammensetzung gebildet werden kann und deren Dichte vorteilhafterweise mit derjenigen der Silikonzusammensetzung vergleichbar ist.

**7.** Zusammensetzung nach einem der vorhergehenden Ansprüche, **dadurch gekennzeichnet, dass** die darin enthaltene teilchenförmige Komponente (D) gewählt ist aus:

• der Gruppe der nicht aggregierten Partikel, als Pulver oder in Suspension in geeigneten Lösungsmitteln, und gewählt aus

* der Gruppe der (Co)polyamidpulver, welche im Wesentlichen runde Partikel enthalten und deren mittlerer Durchmesser Ømd zwischen 0,1 und 50 µm liegt;
* und/oder der Gruppe der Kieselerdepulver mit einem mittleren Partikeldurchmesser Ømd nahe bei oder kleiner 5 µm; wobei die Kieselerden vorteilhafterweise kolloidale Kieselerden, Verbrennungskieselerden, Fällungskieselerden oder deren Mischungen sind;
* und/oder der Gruppe der Metalloxide oder der Glimmerpulver;

• der Gruppe der strukturierten Partikel als Pulver oder in Suspension in geeigneten Lösungsmitteln,
• und deren Mischungen.

**8.** Zusammensetzung nach Anspruch 1, **dadurch gekennzeichnet, dass** sie in Form einer Lösung in wenigstens einem Lösungsmittel (F) vorliegt, welches gewählt ist aus der Gruppe, umfassend Siloxan-Lösungsmittel, organische Lösungsmittel, vorteilhafterweise Aromaten und/oder Alkane, sowie deren Mischungen.

**9.** Zusammensetzung nach Anspruch 8, **dadurch gekennzeichnet, dass** sie durch Herstellung einer POS (A)-Harz-Lösung erhalten wird, und dadurch, dass das Lösungsmittel (F) wenigstens teilweise jenes dieser POS (A)-Harz-Lösung ist.

**10.** Zusammensetzung nach Anspruch 8, **dadurch gekennzeichnet, dass** ihre Konzentration $C_F$ im Lösungsmittel F als p/p im Verhältnis zur endgültigen Mischung beträgt:

$$10 \leq C_F \leq 80.$$

**11.** Zusammensetzung nach einem der vorhergehenden Ansprüche, **dadurch gekennzeichnet, dass** sie wenigstens einen Haftvermittler (G) umfasst.

**12.** Zusammensetzung nach einem der vorhergehenden Ansprüche, **dadurch gekennzeichnet, dass** sie umfasst:

◦ A- 100 Gewichtsteile POS(A)-Trockenharz, mit der Formel $MM^{Vi}Q$,
◦ B- 35 bis 150 Gewichtsteile POS(B) mit der Formel $(M^H)_{(2w+2)}Q_w$ mit w = 1 bis 6,
◦ C- 0,0005 bis 0,1 Gew. Pt als Katalysator (C),
◦ D1- 0 bis 50 Gewichtsteile wenigstens einer teilchenförmigen Komponente (D1), welche aus der Gruppe der (Co)polyamidpulver gewählt ist,
◦ D2- 0 bis 50 Gewichtsteile wenigstens einer teilchenförmigen Komponente (D2), welche aus der Gruppe der Kieselerdepulver gewählt ist,
◦ D3- 0 bis 50 Gewichtsteile wenigstens einer teilchenförmigen Komponente (D3), welche aus der Gruppe der verstärkenden Kieselerdepulver gewählt ist,

◦ D4- 0 bis 50 Gewichtsteile wenigstens einer teilchenförmigen Komponente (D4), welche aus der Gruppe der Metalloxidpulver oder Glimmerpulver gewählt ist,
◦ E- 0,01 bis 1 Gewichtsteile wenigstens eines Vernetzungshemmers (E),
◦ F- 0 bis 800 Gewichtsteile wenigstens eines Lösungsmittels (F),
◦ G- 0 bis 5 Gewichtsteile wenigstens eines Haftvermittlers (G),
◦ H- 0 bis 5 Gewichtsteile wenigstens eines funktionellen Zusatzstoffes (H).

**13.** Verfahren zur Lackierung eines Trägers, **dadurch gekennzeichnet, dass** eine Zusammensetzung nach einem der Ansprüche 1 bis 12 als Lack auf die Oberfläche des Trägers aufgetragen wird.

**14.** Verfahren zur Lackierung nach Anspruch 13, **dadurch gekennzeichnet, dass** der Träger Silikon umfasst, wobei das Silikon wenigstens eine Beschichtung des Trägers bildet und dass der Lack auf die Oberfläche des Silikons aufgetragen wird.

**15.** Verfahren zur Lackierung eines Trägers, **dadurch gekennzeichnet, dass** die Zusammensetzung nach einem der Ansprüche 1 bis 12 als Lack auf die Oberfläche des Trägers aufgetragen wird, wobei die Oberfläche wenigstens ein nicht-Silikon-(Co)polymer umfasst, gewählt aus der Gruppe, umfassend: Polyamide, Polyolefine, Polyester, deren Mischungen und Copolymere.

**16.** Verfahren nach einem der Ansprüche 13 bis 15, **dadurch gekennzeichnet, dass** es im Wesentlichen umfasst:

- Härten des Trägers mittels der Lackzusammensetzung nach einem der Ansprüche 1 bis 12,
- Vernetzen der Lackschicht, ggf. durch thermisches Aktivieren der Vernetzung.

**17.** Verbundstoff, welcher durch das Verfahren nach einem der Ansprüche 13 bis 16 erhalten werden kann, **dadurch gekennzeichnet, dass** er umfasst:

◦ einen Träger, welcher gewählt ist aus der Gruppe, umfassend:

-> Textilien
-> nicht gewebte Faserträger,
-> Polymerfolien,

◦ ggf. eine Beschichtung, die mit wenigstens einer der Seiten des Trägers verbunden ist und wenigstens eine Schicht eines Silikon-Elastomers und/oder wenigstens eines anderen (Co)polymers umfasst,
◦ wenigstens eine Lackschicht, welche die Zusammensetzung nach einem der Ansprüche 1 bis 12 umfasst.

**18.** Zusammensetzung nach Anspruch 17, **dadurch gekennzeichnet, dass** der Träger wenigstens eine Beschichtung auf wenigstens einer seiner Seiten umfasst, wobei diese Beschichtung wenigstens eine Silikon-Elastomer-Schicht und/oder wenigstens ein anderes (Co)polymer umfasst und dass der Lasck eine Dicke kleiner gleich 15 $\mu$m aufweist.

**19.** Verbundstoff, welcher durch das Verfahren nach einem der Ansprüche 13 bis 16 erhalten werden kann, **dadurch gekennzeichnet, dass** er umfasst:

- einen massiven Träger, ggf. aus Silikon, und/oder der wenigstens teilweise mit Silikon bedeckt ist,
- und wenigstens eine Lackschicht, welche die Zusammensetzung nach einem der Ansprüche 1 bis 12 umfasst.

**20.** Verbundstoff nach einem der Ansprüche 17 bis 19, **dadurch gekennzeichnet**, das der Träger wenigstens ein Material umfasst, welches gewählt ist aus der Gruppe, umfassend:

- Glas in kompakter Form oder als Fasern,
- Keramik in kompakter Form oder als Fasern,
- natürliche oder synthetische Polymere, die in kompakter Form, als Fasern oder als Folien vorliegen,
- Zellulosematerialien, Lignozellulosematerialien in kompakter Form oder als Fasern,

und
- deren Verbindungen.

**21.** Hergestellter Artikel, **dadurch gekennzeichnet, dass** er wenigstens einen Verbundstoff umfasst, der durch das

Verfahren nach einem der Ansprüche 13 bis 16 erhalten wird, oder wenigstens einen Verbundstoff nach einem der Ansprüche 17 bis 20.

**22.** Verwendung der Zusammensetzung nach einem der Ansprüche 1 bis 12 als Lack auf einer Silikon- oder nicht-Silikon-Oberfläche zur Fertigung von unter Ausschluss architektonischer Textilien hergestellten Artikeln.

## Claims

**1.** Silicone composition cross-linkable by polyaddition and comprising:

- at least two inter-reactive organosilica species (A), (B) in the presence of a metal catalyst (C) in order to allow cross-linking by polyaddition, these two species being constituted by polyorganosiloxanes (POS);
- at least one cross-linking inhibitor (E),

**characterized in that**

→ the species (A) comprises at least one POS resin, having, per molecule, at least one C2-C6 alkenyl group bound to the silicon and comprising at least two different siloxy units chosen from those of formulae:

$$W_aZ_bSiO_{(4-(a+b))/2} \qquad \mathbf{(1)}$$

in which:

- the symbols W, identical or different, each represent an alkenyl group;
- the symbols Z, identical or different, each represent a non-hydrolyzable monovalent hydrocarbon group, without any adverse effect on the activity of the catalyst chosen from the alkyl groups as well as from the aryl groups,
- a is 1 or 2, b is 0, 1 or 2 and a + b is comprised between 0 and 3,
- optionally at least some of the other units are units of average formula:

$$Z_cSiO_{(4-C)/2} \qquad \mathbf{(2)}$$

in which Z has the same meaning as above and c has a value comprised between 0 and 3;
at least one of these two different siloxy units being a T or Q unit;

→ the species (B) comprises at least one crosslinking agent POS having, per molecule, at least two hydrogen atoms bound to the silicon;
→ the molar ratio R = SiH/SiVi of the hydrogen species (B) to the alkenyl species (A) is such that $R \geq 2$;
→ the concentration $C_B$ in species (B) (in parts by weight for 100 parts by weight of (A)) is such that $200 \geq C_B \geq 30$; and
→ the dynamic viscosity $\eta$ (mPa.s at 25°C) of the composition before application is such that $2 \leq \eta \leq 500$,

the dynamic viscosity at 25°C being measured using a BROOKFIELD viscosimeter, according to the AFNOR NFT 76 102 standard of February 1972.

**2.** Composition according to claim 1, **characterized in that** the POS resin (A) comprises molecules constituted by $M^{Alk}$, M and Q siloxy units and/or molecules constituted by M, $D^{Alk}$ and Q siloxy units.

**3.** Composition according to any one of the preceding claims, **characterized in that** the POS resin (A) has a content by weight of alkenyl radical(s) comprised between 0.1 and 20 % by weight.

**4.** Composition according to any one of the preceding claims, **characterized in that** the species (A) comprises at least one hyperalkenylated POS (A"), this hyperalkenylated POS (A") comprising siloxyl units of formula:

$$W''_{a''}Z''_{b''}SiO_{(4-(a''+b''))/2} \qquad \mathbf{(1'')}$$

in which:

- the symbols W", identical or different, each represent an alkenyl group;
- the symbols Z", identical or different, each represent a non hydrolyzable monovalent hydrocarbon group, without any adverse effect on the activity of the catalyst chosen from the alkyl groups as well as from the aryl groups,
- a" is 1 or 2, b" is 0, 1 or 2 and a" + b" is comprised between 1 and 3,
- optionally at least some of the other units are units of average formula:

$$Z''_{c''}SiO_{(4-c'')/2} \qquad \textbf{(2'')}$$

in which Z" has the same meaning as above and c" has a value comprised between 0 and 3;
this hyperalkenylated POS (A") comprising molecules of the following formula:

$$(M^{Alk})_n(D)_p(D^{Alk})_q(M)_m$$

in which

$p \geq 0$, $q > 0$, $n + q \geq 3$;
$n = 0$, 1 or 2;
$m = 0$, 1 or 2.

**5.** Composition according to any one of the preceding claims, **characterized in that** the species (B) comprises at least one hydrogenated POS (B), this POS (B) comprising siloxyl units of formula:

$$H_dL_eSiO_{(4-(d+e))/2} \qquad (3)$$

in which:

- H is hydrogen,
- the symbols L, identical or different, each represent a non-hydrolyzable monovalent hydrocarbon group, without any adverse effect on the activity of the catalyst,
- d is 1 or 2, e is 0, 1 or 2 and d + e has a value comprised between 1 and 3;
- optionally, at least some of the other units being units of average formula:

$$L_gSiO_{(4-g)/2} \qquad \textbf{(4)}$$

in which L has the same meaning as above and g has a value comprised between 0 and 3;

this hydrogenated POS (B) corresponding to molecules of the following formulae **(5)** and/or **(6):**

$$(M^H)_r(D)_s(D^H)_t(M)_u \qquad \textbf{(5)}$$

in which:

$r = 0 - 2$;
$s = 0 - 50$;
$t = 0 - 70$;
$u = 0 - 2$;
$r \geq 0$; $s \geq 0$; $t \geq 0$; $u \geq 0$; $r + t \geq 3$

$$(M^H)_{(2w+2)}Q_w \qquad \textbf{(6)}$$

formula in which:

w = 1 to 6.

6. Composition according to any one of the preceding claims, **characterized in that** it contains a particulate component (D), selected from the group of powders comprising particles, the diameter of which is approximately 1 to 2 times the thickness of the layer of varnish which can be produced from said composition and the density of which is advantageously comparable to that of the silicone composition.

7. Composition according to any one of the preceding claims, **characterized in that** the particulate component (D) which it contains is selected:

- from the group of the non-aggregated particles, in powder or in suspension in suitable solvents, and chosen:

  * from the group of powders of (co)polyamides comprising particles substantially rounded in shape and with an average diameter $\Phi ad$ comprised between 0.1 and 50 $\mu m$;
  * and/or from the group of silica powders having an average particle diameter $\Phi ad$ close to or less than 5 $\mu m$; these silicas being advantageously colloidal silicas, combustion silicas, precipitation silicas or their mixtures;
  * and/or from the group of metal oxides, or also mica powders;

- from the group of structured particles in the form of powder or in suspension in suitable solvents;
- and from their mixtures.

8. Composition according to claim 1, **characterized in that** it is presented in the form of a solution in at least one solvent (F) chosen from the group comprising the siloxanic solvents, the organic solvents, advantageously the aromatics and/or the alkanes, and their mixtures.

9. Composition according to claim 8, **characterized in that** it is obtained by utilizing a solution of POS resin (A) and **in that** the solvent (F) is at least in part that of this solution of POS resin (A).

10. Composition according to claim 8, **characterized in that** its concentration $C_F$ of solvent F expressed in w/w with respect to the final mixture is such that:

$\rightarrow 10 \leq C_F \leq 80$.

11. Composition according to any one of the preceding claims, **characterized in that** it comprises at least one adherence promoter (G).

12. Composition according to any one of the preceding claims, **characterized in that** it comprises:

- A- 100 parts by weight of dry POS resin (A), of formula $MM^{Vi}Q$,
- B- 35 to 150 parts by weight of POS (B) of formula $(M^H)_{(2w+2)}Q_w$ with w = 1 to 6,
- C- 0.0005 to 0.1 by weight of Pt as catalyst (C),
- D1- 0 to 50 parts by weight of at least one particulate component (D1) chosen from the group of powders of (co)polyamides,
- D2- 0 to 50 parts by weight of at least one particulate component (D2) chosen from the group of silica powders,
- D3- 0 to 50 parts by weight of at least one particulate component (D3) chosen from the group of the reinforcing silica powders,
- D4- 0 to 50 parts by weight of at least one particulate component (D4) chosen from the group of metal oxide powders, or also mica powders,
- E- 0.01 to 1 parts by weight of at least one cross-linking inhibitor (E),
- F- 0 to 800 parts by weight at least one solvent (F),
- G- 0 to 5 parts by weight of at least one adherence promoter (G);
- H- 0 to 5 parts by weight of at least one functional additive (H).

13. Method for varnishing a support, **characterized in that** the composition according to any one of the claims 1 to 12 is applied as a varnish to the surface of said support.

14. Varnishing method according to claim 13, **characterized in that** the support comprises silicone, this silicone forming

at least one coating of said support and **in that** the varnish is applied to the surface of the silicone.

**15.** Method for varnishing a support, **characterized in that** the composition according to any one of the claims 1 to 12 is applied as a varnish to the surface of said support, this surface comprising at least one non silicone (co)polymer selected from the group comprising: the polyamides, polyolefins, polyesters, their mixtures and copolymers.

**16.** Method according to at least one of claims 13 to 15, **characterized in that** it essentially involves:

- coating the support using the varnish composition according to any one of claims 1 to 12,
- and cross-linking the layer of varnish, optionally by thermally activating the cross-linking.

**17.** Composite, capable of being obtained by the method according to any one of claims 13 to 16, **characterized in that** it comprises:

◦ a support chosen from the group comprising:

→ textiles,
→ non-woven fibrous supports,
→ polymer films,

◦ optionally a coating integral with at least one of the faces of the support and comprising at least one layer of silicone elastomer and/or at least one other (co)polymer,
◦ at least one layer of varnish comprising the composition according to any one of claims 1 to 12.

**18.** Composite according to claim 17, **characterized in that** the support comprises at least one coating on at least one of its faces, this coating comprising at least one layer of silicone elastomer and/or at least one other (co)polymer and **in that** the varnish has a thickness less than or equal to 15 $\mu$m.

**19.** Composite capable of being obtained by the method according to any one of claims 13 to 16, **characterized in that** it comprises:

- a solid support optionally made of silicone and/or at least partially coated with silicone,
- and at least one layer of varnish comprising the composition according to any one of claims 1 to 12.

**20.** Composite according to at least one of claims 17 to 19, **characterized in that** the support comprises at least one material chosen from the group comprising:

- glass in solid form or in the form of fibres,
- ceramics in solid form or in the form of fibres,
- natural or synthetic polymers, being presented in solid form, in the form of fibres, or in the form of films,
- cellulosic, ligno-cellulosic materials in solid or fibrous form,
- and their combinations.

**21.** Manufactured article, **characterized in that** it comprises at least one composite capable of being obtained by the method according to any one of claims 13 to 16, or at least one composite according to any one of claims 17 to 20.

**22.** Use of the composition according to any one of the claims 1 to 12, as a varnish, on a silicone or non silicone surface, in order to produce manufactured articles with the exclusion of architectural textiles.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2719598 B
- WO 03106564 PCT
- WO 2004067613 A
- WO 2004067620 A
- EP 1013817 A
- WO 0198418 A
- US 3159601 A
- US 3159602 A
- US 3220972 A
- EP 0057459 A
- EP 0188978 A
- EP 0190530 A
- US 3419593 A
- US 3715334 A
- US 3377432 A
- US 3814730 A
- FR 1528464 B
- FR 2372874 A
- US 3284406 A
- US 3436366 A
- US 3697473 A
- US 4340709 A
- US 3065194 A
- US 3542901 A
- US 3779986 A
- US 4417042 A
- FR 2638752 A
- US 3678002 A
- US 3888815 A
- US 3933729 A
- US 4064096 A
- US 3142655 A
- US 3821140 A
- US 3836489 A
- US 3839266 A


### Littérature non-brevet citée dans la description


- Chemistry and technology of silicones. Walter NOLL Academic Press, 1968, 3
- **WALTER NOLL.** Chemistry and Technology of Silicones. Academic Press, 1968, 386-409